(19) Europäisches Patentamt
European Patent Office
Office européen des brevets

(11) **EP 4 316 765 A1**

(12) **EUROPEAN PATENT APPLICATION**
published in accordance with Art. 153(4) EPC

(43) Date of publication:
**07.02.2024 Bulletin 2024/06**

(21) Application number: **22775762.2**

(22) Date of filing: **24.03.2022**

(51) International Patent Classification (IPC):
**B29B 11/16** (2006.01)   **D04H 13/00** (2006.01)
**C08J 5/04** (2006.01)   **D04H 1/732** (2012.01)
**B29C 70/18** (2006.01)   **B29C 70/28** (2006.01)

(52) Cooperative Patent Classification (CPC):
**B29B 11/16; B29C 70/18; B29C 70/28; C08J 5/04;
D04H 1/732; D04H 13/00**

(86) International application number:
**PCT/JP2022/013893**

(87) International publication number:
**WO 2022/202981 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2021 JP 2021051671**

(71) Applicant: **Toray Industries, Inc.
Tokyo 103-8666 (JP)**

(72) Inventors:
• **YAMANAKA, Yusuke**
**Nagoya-shi, Aichi 455-8502 (JP)**
• **HASHIMOTO, Takafumi**
**Nagoya-shi, Aichi 455-8502 (JP)**
• **ONO, Yasukazu**
**Nagoya-shi, Aichi 455-8502 (JP)**
• **WATANABE, Tadashi**
**Nagoya-shi, Aichi 455-8502 (JP)**

(74) Representative: **Hoefer & Partner Patentanwälte
mbB
Pilgersheimer Straße 20
81543 München (DE)**

(54) **SHORT FIBER-REINFORCED PREPREG SHEET AND METHOD FOR PRODUCING SHORT FIBER-REINFORCED PREPREG SHEET**

(57)   An object of the present invention is to provide a short fiber-reinforced prepreg sheet in which the basis weight of the end portions of the short fiber-reinforced prepreg sheet is controlled, in which the variation in the basis weight in the sheet width direction is small, and which has a low loss width relative to the product width.

The short fiber-reinforced prepreg sheet according to the present invention for achieving the above-described object, is a short fiber-reinforced prepreg sheet including a matrix resin and chopped fiber bundles, in which the coefficient of variation, CVa, of the basis weight of the short fiber-reinforced prepreg sheet over the entire width in the width direction thereof is 15% or less. In the short fiber-reinforced prepreg sheet, when a rectangular region having a specific length Lb (mm) in the width direction and 200 mm in the longitudinal direction is provided along a boundary line which is set (the average bundle length of the chopped fiber bundles/2) mm inward from each end in the width direction of the short fiber-reinforced prepreg sheet, on the inner side of the short fiber-reinforced prepreg sheet with respect to the boundary line such that the long side of the rectangular region overlaps with the boundary line, the basis weight of the rectangular region is 80% or more and 105% or less of the average basis weight of the short fiber-reinforced prepreg sheet over the entire width in the width direction thereof.

[ FIG. 2 ]

**Description**

Technical Field

The present invention relates to a short fiber-reinforced prepreg sheet, and a method of producing a short fiber-reinforced prepreg sheet.

Background Art

Short fiber-reinforced prepreg sheets obtained by impregnating a chopped fiber-bundle deposit with a matrix resin are known. The "chopped fiber-bundle deposit" refers to one in which chopped fiber bundles obtained by cutting a reinforcing fiber bundle into a specified length are scattered and randomly distributed. Examples of the short fiber-reinforced prepreg sheet include a sheet molding compound (hereinafter, referred to as SMC) and a stampable sheet.

A short fiber-reinforced prepreg sheet including chopped fiber bundles as reinforcing fibers has an excellent formability during forming as well as fluidity during heat and pressure molding, since the reinforcing fibers do not restrain substrate deformation as in the case of a prepreg sheet including continuous fibers as a reinforcing material. Further, the number of entangling points in a chopped fiber-bundle deposit is smaller than the number of entangling points in a nonwoven fabric or a web as a precursor thereof, which is composed of fiber bundles fragmented to single fibers or to an extent close to single fibers. Therefore, a short fiber-reinforced prepreg sheet including chopped fiber bundles does not have morphological retention and has an excellent formability during forming as well as fluidity during heat and pressure molding, as compared with a short fiber-reinforced prepreg sheet including a nonwoven fabric or a web as a precursor thereof, as a reinforcing material.

A short fiber-reinforced prepreg sheet including chopped fiber bundles generally has a large variation in basis weight as compared with a prepreg sheet including continuous fibers. This is mainly due to the variation in the basis weight of the chopped fiber-bundle deposit. Accordingly, it is desired to reduce the variation in the basis weight of the chopped fiber-bundle deposit, in order to reduce the variation in the basis weight of the resulting short fiber-reinforced prepreg sheet, and to reduce the variation in mass of the resulting molded article.

In the case of preparing a chopped fiber-bundle deposit, a reinforcing fiber bundle is cut to prepare chopped fiber bundles, and then the chopped fiber bundles are scattered on a moving body that moves continuously in the downstream direction of the production process, to prepare the chopped fiber-bundle deposit. The basis weight of the chopped fiber-bundle deposit at this time is determined by the amount of the reinforcing fiber bundle to be supplied to the cutter and the speed of the moving body.

The length in the width direction of the chopped fiber-bundle deposit can be controlled by performing the scattering of the chopped fiber bundles within a scattering region having standing walls that restrict the scattering width, at both end portions in the width direction of the moving body.

Further, the variation in the basis weight in the width direction of the chopped fiber-bundle deposit is adjusted by controlling the amount of the chopped fiber bundle to be introduced, in the width direction of the moving body. For example, in cases where a plurality of reinforcing fiber bundles are arranged in a row in the width direction of the moving body, cut and then scattered to prepare a chopped fiber-bundle deposit, the variation in the basis weight in the width direction of the moving body can be controlled by adjusting the positions at which the reinforcing fiber bundles are cut and scattered, in the width direction of the moving body. In cases where a plurality of reinforcing fiber bundles are not introduced, a method is known, for example, in which the position at which a reinforcing fiber bundle is cut and the chopped carbon fiber bundles are introduced, is allowed to traverse in the width direction of the moving body, so that the variation in the basis weight in the width direction of the resulting chopped fiber-bundle deposit is reduced. It is also possible to introduce a distribution mechanism in order to uniformly distribute the chopped fiber bundles, and to further improve the variation in the basis weight in the width direction of the chopped fiber-bundle deposit.

Further, there is a case in which a chopped fiber-bundle deposit is formed on the moving body multiple times, in order to increase randomness during the scattering of the chopped fiber bundles and to perform scattering uniformly. For example, methods are known in which a plurality of apparatuses for producing a chopped fiber-bundle deposit are installed in the direction of travel of the moving body, and in which chopped fiber-bundle deposits are layered by a cross lapping apparatus.

In the case of producing a short fiber-reinforced prepreg sheet using a chopped fiber-bundle deposit, the short fiber-reinforced prepreg sheet can be produced, for example, by a method in which: a mold release film is used as the moving body; chopped fiber bundles are allowed to deposit on the mold release film which has been unwound and on the upper surface of which a matrix resin has been coated, to prepare the chopped fiber-bundle deposit; thereafter, another film on the upper surface of which the matrix resin has been coated in the same manner, is disposed such that the surface coated with the matrix resin faces the side of the chopped fiber-bundle deposit; and a pressure is applied from the upper and lower surfaces to allow the chopped fiber-bundle deposit to be impregnated with the matrix resin.

Patent Literature 1 discloses a technique that improves the problem of unevenness in basis weight during scattering, by a step in which chopped fiber bundles that have been cut are transported, and then scattered. Patent Literature 2 discloses a chopped fiber-bundle deposit whose coefficients of variation of basis weight and bulkiness are less than 20%. Patent Literature 3 discloses a technique of applying a pressure to a prepreg that has been produced in a state in which the prepreg is restricted in the width direction, to allow the basis weight of the prepreg after being impregnated to be further uniform.

Citation List

Patent Literature

Patent Literature 1: JP 2014-210991 A
Patent Literature 2: JP 2019-39124 A
Patent Literature 3: JP 5822033 B

Summary of Invention

Technical Problem

While Patent Literature 1 discloses a technique that controls unevenness in basis weight up to a point immediately before the scattering step, in order to reduce the variation in the basis weight of the resulting fiber-reinforced prepreg sheet, the unevenness in basis weight still occurs during the scattering. The technique disclosed in Patent Literature 2 fails to control the variation in the basis weight in the width direction. The technique disclosed in Patent Literature 3 fails to control the basis weight and the Wf of the non-product portions at the endmost portions of the prepreg. The "Wf' represents the mass proportion of the reinforcing fibers contained in the short fiber-reinforced prepreg sheet. Further, since the impregnated substrate is allowed to flow actively, the matrix resin alone tends to flow, failing to control the basis weight and the Wf. If the pressing pressure is further increased, there is a possibility that the reinforcing fibers also move, but the basis weight and the Wf cannot be controlled, leading to the twisting or orientation of the reinforcing fibers.

In any of Patent Literatures 1 to 3, as described above, there is room for improvement in the variation in the basis weight of the short fiber-reinforced prepreg sheet in the width direction thereof, and the control for the non-product portions at the end portions in the width direction of the short fiber-reinforced prepreg sheet has not been performed.

As described above, the length in the width direction of the resulting chopped fiber-bundle deposit can be controlled by performing the scattering of the chopped fiber bundles within a scattering region having standing walls that restrict the scattering width in the width direction of the moving body. However, the chopped fiber bundles which have come into contact with the surfaces of the standing walls that restrict the scattering width, during the scattering, deposit immediately below the standing walls, to form regions with a locally high basis weight, even in cases where it is intended to maintain the basis weight of the end portions of the chopped fiber-bundle deposit at a level equal to that of the central portion.

This is a problem that occurs when the scattering width of the chopped fiber-bundle deposit is restricted by providing standing wall surfaces in the width direction of the moving body, and this problem occurs even in cases where the scattered chopped fiber bundles are distributed within the scattering region by a distribution mechanism. Further, in cases where the standing walls that restrict the scattering width of the chopped fiber-bundle deposit in the width direction of the moving body are not provided, the chopped fiber bundles are scattered in a wide area, and may cause an extreme increase in the non-product portions, or the chopped fiber bundles which have not been impregnated with the resin may remain at the end portions in the width direction of the short fiber-reinforced prepreg sheet. The mixing of such unimpregnated chopped fiber bundles into the resulting product causes swelling when the short fiber-reinforced prepreg sheet is molded. As described above, it has been conventionally difficult to control the non-product portions at the end portions in the width direction of the chopped fiber-bundle deposit.

To solve the above-mentioned problems, the present invention provides a short fiber-reinforced prepreg sheet in which the basis weight of the end portions of the short fiber-reinforced prepreg sheet is controlled, in which the variation in the basis weight in the sheet width direction is small, and which has a low loss width relative to the product width.

Solution to Problem

The present invention employs the following means in order to solve the above-mentioned problems.

[1] A short fiber-reinforced prepreg sheet including a matrix resin and chopped fiber bundles,

wherein the coefficient of variation, CVa, of the basis weight of the short fiber-reinforced prepreg sheet over the entire width in the width direction thereof is 15% or less;

wherein, when a rectangular region having a size of Lb (mm) in the width direction and 200 mm in the longitudinal direction is provided along a boundary line which is set (the average bundle length of the chopped fiber bundles/2) mm inward from each end in the width direction of the short fiber-reinforced prepreg sheet, on the inner side of the short fiber-reinforced prepreg sheet with respect to the boundary line such that the long side of the rectangular region overlaps with the boundary line, the basis weight of the rectangular region is 80% or more and 105% or less of the average basis weight of the short fiber-reinforced prepreg sheet over the entire width in the width direction thereof; and

wherein:

Na represents the number (integer) of partitions which makes the length of one unit closest to 100 mm when the short fiber-reinforced prepreg sheet is equally divided in the sheet width direction;

La represents the value obtained by dividing the sheet width by Na;

Nb represents the number (integer) of partitions which makes the length of one unit closest to 25 mm when the portion of the short fiber-reinforced prepreg sheet between the boundary lines at both end portions is equally divided in the sheet width direction;

Lb represents the value obtained by dividing the length between the boundary lines at both end portions by Nb; and

the coefficient of variation, CVa, of the basis weight of the short fiber-reinforced prepreg sheet over the entire width in the width direction thereof, represents the coefficient of variation obtained by cutting out Na pieces of squares each having sides of La (mm) from the prepreg sheet so as to be adjacent with each other in the sheet width direction, and calculating from the mass Wi (i = 1 to Na) of each of the regions of the thus cut out squares, using the following equations (1) and (2):

[Math 1]

$$\mathrm{CVa}\ [\%] = \frac{1}{W_{ave}} \times \sqrt{\frac{\sum_{1}^{Na}\ (W_i^2 - W_{ave}^2)}{Na}} \times 100 \qquad (1)$$

[Math 2]

$$\mathrm{Wave} = \sum_{1}^{Na} \frac{W_i}{Na} \qquad (2)$$

[2] The short fiber-reinforced prepreg sheet of [1], wherein an area of at least 10 mm extending outward from each end in the width direction of the short fiber-reinforced prepreg sheet is covered with a mold release film.

[3] The short fiber-reinforced prepreg sheet of [1] or [2], wherein the Wf (%) of the rectangular region arranged on the inner side of the short fiber-reinforced prepreg sheet with respect to the boundary line is 80% or more and 120% or less of the average Wf (%) of the short fiber-reinforced prepreg sheet over the entire width in the width direction thereof;

wherein Wf represents the mass proportion of the reinforcing fibers contained in the short fiber-reinforced prepreg sheet.

[4] The short fiber-reinforced prepreg sheet of any one of [1] to [3], wherein, when Nb pieces of rectangular regions each having a size of Lb (mm) × 200 mm are cut out so as to be adjacent with each other in the width direction, from the portion of the prepreg sheet between the boundary lines at both end portions, such that the long sides of the rectangular regions are parallel to the boundary lines, the basis weight of each of all the rectangular regions is 80% or more and 120% or less of the average basis weight of the short fiber-reinforced prepreg sheet over the entire width in the width direction thereof.

[5] The short fiber-reinforced prepreg sheet of any one of [1] to [4], wherein, when two pieces of rectangular regions each having a width of Lb (mm) and a length of 200 mm are cut out, in order, from the end in the width direction of the short fiber-reinforced prepreg sheet in the inward direction of the short fiber-reinforced prepreg sheet, the rectangular region on the end portion side of the short fiber-reinforced prepreg sheet has a lower basis weight.

[6] The short fiber-reinforced prepreg sheet of any one of [1] to [5], wherein the reinforcing fibers are carbon fibers.

[7] The short fiber-reinforced prepreg sheet of any one of [1] to [6], wherein the chopped fiber bundles have an average bundle length of 5 mm or more and 100 mm or less.

[8] The short fiber-reinforced prepreg sheet of any one of claims [1] to [7], wherein the average basis weight of the short fiber-reinforced prepreg sheet over the entire width in the width direction thereof is from 1,000 $g/m^2$ to 4,000 $g/m^2$.

[9] A method of producing a short fiber-reinforced prepreg sheet, the method including:

a scattering step of scattering chopped fiber bundles on a moving body that moves continuously in the downstream direction of the production process, to obtain a chopped fiber-bundle deposit; and

an impregnation step of impregnating the chopped fiber-bundle deposit with a matrix resin, by layering a film coated with the matrix resin, on at least one side of the chopped fiber-bundle deposit;

wherein the chopped fiber-bundle deposit is passed through a mechanism for adjusting the basis weight of end portions, that adjusts the basis weight of the end portions in the width direction of the chopped fiber bundles that have been scattered, before being passed through the impregnation step.

[10] The method of producing a short fiber-reinforced prepreg sheet short fiber-reinforced prepreg sheet, of [9], wherein the mechanism for adjusting the basis weight of end portions is a mechanism that, after the completion of the scattering step performed within a scattering region having standing walls that restrict both end portions in the width direction of the moving body, spreads and levels the chopped fiber bundles included in high basis weight regions formed at both end portions in the width direction of the chopped fiber-bundle deposit, outward in the width direction.

[11] The method of producing a short fiber-reinforced prepreg sheet short fiber-reinforced prepreg sheet, of [9] or [10], wherein the mechanism for adjusting the basis weight of end portions is a mechanism that, after the completion of the scattering step performed within a scattering region having standing walls that restrict both end portions in the width direction of the moving body, spreads and levels the chopped fiber bundles included in high basis weight regions formed at the both end portions, outward in the width direction, by baffle plates or rolls disposed on the downstream side of the scattering region such that the baffle plates or rolls extend outwardly toward the downstream direction.

[12] The method of producing a short fiber-reinforced prepreg sheet short fiber-reinforced prepreg sheet, of [9], wherein the mechanism for adjusting the basis weight of end portions is standing walls that have a section in which the distance between the standing walls gradually increases toward the downstream of the production process, in the scattering step performed within a scattering region having standing walls that restrict both end portions in the width direction of the moving body.

[13] The method of producing a short fiber-reinforced prepreg sheet short fiber-reinforced prepreg sheet, of [9], wherein the mechanism for adjusting the basis weight of end portions is obstacles that are provided on the inner sides of the standing walls and that prevent the chopped fiber bundles from colliding with the standing walls, in the scattering step performed within a scattering region having standing walls that restrict both end portions in the width direction of the moving body.

Advantageous Effects of Invention

According to the short fiber-reinforced prepreg sheet according to the present invention, it is possible to provide a short fiber-reinforced prepreg sheet in which the variation in the basis weight of the short fiber-reinforced prepreg sheet in the width direction thereof is small, and which has a low loss width relative to the product width, by controlling the basis weight of the end portions of the short fiber-reinforced prepreg sheet.

Brief Description of Drawings

FIG. 1 is a diagram showing the bundle length of chopped fiber bundles.
FIG. 2 is a diagram showing one example of a method of producing a short fiber-reinforced prepreg sheet.
FIG. 3 is a diagram showing the width of the short fiber-reinforced prepreg sheet.
FIG. 4 is a diagram showing the width of a chopped fiber-bundle deposit.
FIG. 5 is a diagram showing the regions at which the basis weight and the Wf are measured.
FIG. 6 shows diagrams of one example of a means that spreads and levels the chopped fiber bundles included in high basis weight regions formed at both end portions of the chopped fiber-bundle deposit, outward in the width direction.
FIG. 7 shows a diagram of one example of standing walls in the case of having a section in which the distance between the standing walls gradually increases toward the downstream of the production process.
FIG. 8 shows diagrams of examples of obstacles that are provided on the inner sides of the standing walls and that prevent the chopped fiber bundles from colliding with the standing walls.

Description of Embodiments

Embodiments for carrying out the invention will be described below in detail.
The short fiber-reinforced prepreg sheet according to the present invention is a short fiber-reinforced prepreg sheet including a matrix resin and chopped fiber bundles,

wherein the coefficient of variation, CVa, of the basis weight of the short fiber-reinforced prepreg sheet over the entire width in the width direction thereof is 15% or less;
wherein, when a rectangular region having a size of Lb (mm) in the width direction and 200 mm in the longitudinal direction is provided along a boundary line which is set (the average bundle length of the chopped fiber bundles/2) mm inward from each end in the width direction of the short fiber-reinforced prepreg sheet, on the inner side of the short fiber-reinforced prepreg sheet with respect to the boundary line such that the long side of the rectangular region overlaps with the boundary line, the basis weight of the rectangular region is 80% or more and 105% or less of the average basis weight of the short fiber-reinforced prepreg sheet over the entire width in the width direction thereof; and
wherein:

Na represents the number (integer) of partitions which makes the length of one unit closest to 100 mm when the short fiber-reinforced prepreg sheet is equally divided in the sheet width direction;
La represents the value obtained by dividing the sheet width by Na;
Nb represents the number (integer) of partitions which makes the length of one unit closest to 25 mm when the portion of the short fiber-reinforced prepreg sheet between the boundary lines at both end portions is equally divided in the sheet width direction;
Lb represents the value obtained by dividing the length between the boundary lines at both end portions by Nb; and
the coefficient of variation, CVa, of the basis weight of the short fiber-reinforced prepreg sheet over the entire width in the width direction thereof, represents the coefficient of variation obtained by cutting out Na pieces of squares each having sides of La (mm) from the prepreg sheet so as to be adjacent with each other in the sheet width direction, and calculating from the mass Wi (i = 1 to Na) of each of the regions of the thus cut out squares, using the following equations (1) and (2):
[Math 3]

$$CVa\,[\%] = \frac{1}{W_{ave}} \times \sqrt{\frac{\sum_1^{Na}\ (W_i{}^2 - W_{ave}{}^2)}{Na}} \times 100 \qquad (1)$$

[Math 4]

$$Wave = \sum_1^{Na} \frac{W_i}{Na} \qquad (2)$$

Examples of the reinforcing fibers to be used in the present invention include: organic fibers such as aramid fibers, polyethylene fibers and polyparaphenylene benzoxazole (PBO) fibers; inorganic fibers such as glass fibers, carbon fibers, silicon carbide fibers, alumina fibers, Tirano fibers, basalt fibers and ceramic fibers; metal fibers such as stainless-steel fibers and steel fibers; and boron fibers; natural fibers; and modified natural fibers. In many cases, these reinforcing fibers are handled in the form of a reinforcing fiber bundle formed by bundling a number of monofilaments aligned in on direction.
The number of monofilaments included in the reinforcing fiber bundle is preferably 1,000 or more and 100,000 or less, and more preferably 1,000 or more and 50,000 or less, but not particularly limited thereto. When the number of monofilaments is within the range described above, the productivity can be improved.
The reinforcing fiber bundle can be directly cut to a predetermined length, as a means for obtaining chopped fiber bundles to be described later. The chopped fiber bundles preferably have a length of 8 mm or more and 50 mm or less, and more preferably 10 mm or more and 30 mm or less. The form of the reinforcing fiber bundle for obtaining the chopped fiber bundles may also be a strand which has been subjected to a partial separation treatment. The "partial separation treatment" as used herein refers to a treatment that performs a separation treatment intermittently, along the orientation direction of the monofilaments constituting a strand. In cases where the end portions of strands which have been subjected to the partial separation treatment are joined to form a joined strand, and the overlapping portions of the joined strand are also formed into the chopped fiber bundles, it is possible to continuously supply the strand while maintaining the handleability obtained by being subjected to the partial separation treatment.

Any of these reinforcing fibers can be impregnated with a matrix resin to be used as a reinforcing material of a fiber-reinforced composite material. In particular, carbon fibers (particularly, PAN-based carbon fibers) are suitable for forming a fiber-reinforced composite material, because carbon fibers not only are lightweight among these reinforcing fibers, but also have a particularly excellent specific strength and elastic modulus, as well as an excellent heat resistant and chemical resistance.

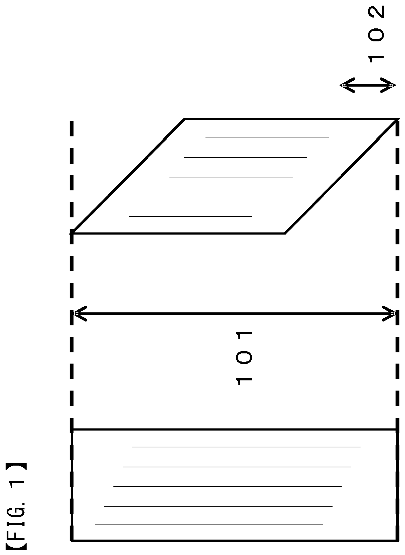

The "chopped fiber bundles" refer to those obtained by cutting a reinforcing fiber bundle to a desired length. FIG. 1 shows one example of the bundle length 101 of the chopped fiber bundles. The bundle length of the chopped fiber bundles is defined as the length in the monofilament direction, between two points that protrude most in the orientation direction 102 of the monofilaments constituting the chopped fiber bundles.

The average bundle length of the chopped fiber bundles is the value obtained by: extracting 100 chopped fiber bundles at random; measuring the bundle length of each chopped fiber bundle by the method described above; and then calculating the arithmetic mean value of the measured values of the bundle length of the 100 chopped fiber bundles.

The number of monofilaments in the chopped fiber bundles is preferably 1,000 or more and 50,000 or less, more preferably 1,000 or more and 24,000 or less, and still more preferably 1,000 or more and 4,000 or less, but not particularly limited thereto. When the number of monofilaments is within the range described above, high mechanical properties can be obtained.

As the matrix resin, either a thermosetting resin or a thermoplastic resin can be suitably used. Examples of the thermosetting resin include thermosetting resins such as epoxy resins, unsaturated polyester resins, vinyl ester resins, phenol resins, epoxy acrylate resins, phenoxy resins, alkyd resins, urethane resins, maleimide resins and cyanate resins. In particular, an epoxy resin, an unsaturated polyester resin or a vinyl ester resin is suitably used, because such a resin shows excellent interface adhesion to the reinforcing fibers. The thermosetting resins may be used singly, or in combination of two or more kinds thereof.

Examples of the thermoplastic resin include: polyolefin resins such as polyethylene resins and polypropylene resins; polyamide resins such as Nylon 6 resins and Nylon 6,6 resins; polyester resins such as polyethylene terephthalate resins and polybutylene terephthalate resins; polyphenylene sulfide resins; polyether ketone resins; polyether sulfone resins; and aromatic polyamide resins. The thermoplastic resins may be used singly, or in combination of two or more kinds thereof.

The "prepreg sheet" refers to one obtained by impregnating reinforcing fibers with a matrix resin, then semi-curing or increasing the viscosity of the matrix resin in cases where the matrix resin is a thermosetting resin, and forming the resultant in a form which can be handled as a sheet. In general, continuous fibers or short fibers are known as the reinforcing fibers to be used in the prepreg sheet. The present invention relates to a short fiber-reinforced prepreg sheet using short fibers.

A nonwoven fabric, a web as a precursor thereof or a chopped fiber-bundle deposit is generally known as the form of a short fiber-reinforced substrate to be used in a short fiber-reinforced prepreg sheet. In the case of preparing a chopped fiber-bundle deposit, a reinforcing fiber bundle is cut to prepare chopped fiber bundles, and then the chopped fiber bundles are scattered on a moving body that moves in the downstream direction of the production process, to prepare the chopped fiber-bundle deposit. Since the number of entangling points in a chopped fiber-bundle deposit is smaller than that in a nonwoven fabric or a web as a precursor thereof, which is composed of fiber bundles fragmented to single fibers or to an extent close to single fibers, a short fiber-reinforced prepreg sheet using a chopped fiber-bundle deposit does not have morphological retention and has an excellent formability during forming as well as fluidity during heat and pressure molding, as compared with a short fiber-reinforced prepreg sheet including a nonwoven fabric or a web as a precursor thereof, as a reinforcing material. The present invention relates to a short fiber-reinforced prepreg sheet using a chopped fiber-bundle deposit.

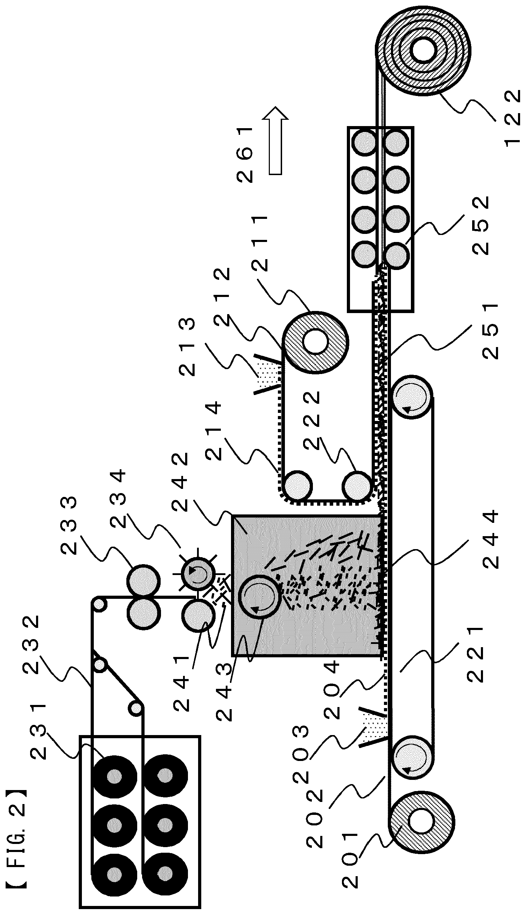

One example of the method of producing the short fiber-reinforced prepreg sheet according to the present invention will be described. The short fiber-reinforced prepreg sheet according to the present invention can be produced, for example, using the apparatus shown in FIG. 2. The apparatus shown in FIG. 2 performs the following resin sheet preparation step, cutting and scattering step and impregnation step.

< Resin Sheet Preparation Step >

In the resin sheet preparation step, a first mold release film 202 is drawn from a first sheet roll 201, and supplied to a first conveyor 221. A predetermined amount of a matrix resin paste supplied from a first resin bath 203 is coated to a predetermined thickness on the upper surface of the first mold release film 202 by a doctor blade, to form a first resin sheet 204.

Further, a continuous second mold release film 212 is drawn from a second sheet roll 211 and supplied to a second conveyor 222. A predetermined amount of a matrix resin paste supplied from a second resin bath 213 is coated to a predetermined thickness on the upper surface of the second mold release film 212 by a doctor blade, to form a second resin sheet 214.

< Cutting and Scattering Step >

In the cutting and scattering step, reinforcing fiber bundles 232 are drawn from bobbins 231 on which the reinforcing fiber bundles have been wound, passed through nip rolls 233, then continuously cut to a predetermined length by a cutter 234, and scattered on the first resin sheet 204.

During the cutting, the continuous reinforcing fiber bundles may be cut at a predetermined angle such that the cutting angle $\theta$ is within the range of $0° < \theta \leq 90°$. The "cutting angle" as used herein refers to the smaller angle of the angles formed between the fiber orientation direction and the line of cutting, which angle is within the range of from $0° < \theta \leq 90°$. The continuous reinforcing fiber bundles can be cut at a predetermined angle, for example, by a method in which a thread is supplied at an angle when being transported to the cutter 234, or a method in which the cutter 234 is set at an angle with respect to the thread.

The cutter 234 is not particularly limited as long as the object of the present invention is not interfered with, and may be, for example, a guillotine blade type cutter or a rotary cutter type cutter. As described above, the direction of the cutting blade with respect to the direction in which the reinforcing fiber strands are transported is not particularly limited, and may be set at an angle, in the same manner as the mechanism that transports the reinforcing fiber strands.

In the present invention, a chopped fiber-bundle deposit having a distribution in the bundle length of the chopped fiber bundles may be used. Discontinuous reinforcing fiber bundles with varying bundle lengths can be obtained, for example, by a method in which a plurality of the cutters 234 are prepared, to obtain discontinuous reinforcing fiber bundles with varying bundle lengths.

At the time of scattering the chopped fiber bundles 241 which have been cut, the scattering can be performed within a scattering region having standing walls 242 that restrict both end portions in the width direction of the moving body. A distributor 243 may be disposed within the scattering region, to distribute the chopped fiber bundles. In this manner, a chopped fiber-bundle deposit 244 is continuously formed on the first resin sheet 204 that travels.

< Impregnation Step >

In the impregnation step, the second resin sheet 214 is allowed to travel, and the matrix resin-coated surface of the second resin sheet 214 is pasted on the chopped fiber-bundle deposit 244, and laminated thereon. In this manner, a short fiber-reinforced prepreg sheet precursor 251 in which the chopped fiber-bundle deposit is sandwiched between the matrix resin-coated surface of the first resin sheet 204 and the matrix resin-coated surface of the second resin sheet 214, is continuously formed. The short fiber-reinforced prepreg sheet precursor 251 is pressurized from both surfaces by pressurization mechanisms 252 to allow the chopped fiber-bundle deposit to be impregnated with the matrix resins coated on the first resin sheet and the second resin sheet, to form a short fiber-reinforced prepreg sheet 253. The description above is one example of the steps, and the present invention is in no way limited to the above-described steps.

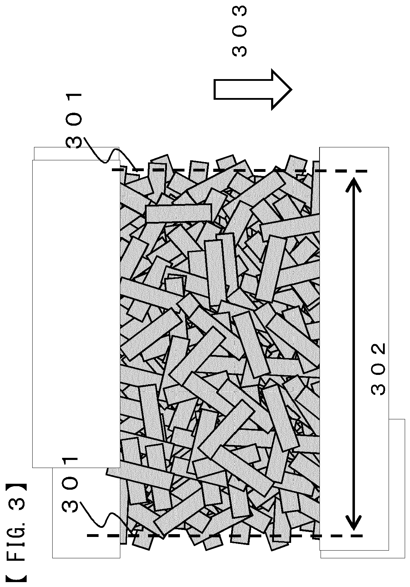

In the case of the short fiber-reinforced prepreg sheet whose ends in the width direction have not been cut out, the width 302 of the short fiber-reinforced prepreg sheet refers, as shown in FIG. 3, to the distance between two straight lines at the ends 301 of the short fiber-reinforced prepreg sheet, at which the ratio of the portions where the chopped fiber bundles are present and absent are 50%:50% and which are parallel to the direction of travel 303 of the first conveyor, when the short fiber-reinforced prepreg sheet is seen from the upper surface thereof. The ends of the short fiber-reinforced prepreg sheet in this case refers to the above-described straight lines. In the case of the short fiber-reinforced prepreg sheet whose ends in the width direction have been cut out, the width of the short fiber-reinforced prepreg sheet refers to the distance between two straight lines at the cut-off ends, and the ends of the short fiber-reinforced prepreg sheet in this case refers to the cut-off straight lines. When the short fiber-reinforced prepreg sheet is being stably and successfully produced, the width of the short fiber-reinforced prepreg sheet is stabilized when the width is calculated from a section of the short fiber-reinforced prepreg sheet extending at least 300 mm in the longitudinal direction thereof. Therefore, the width of the short fiber-reinforced prepreg sheet is defined as the width of the short fiber-reinforced prepreg sheet calculated from a section of the short fiber-reinforced prepreg sheet extending at least 300 mm in the longitudinal direction thereof. Specifically, the width of the short fiber-reinforced prepreg sheet is measured as follows. The short fiber-reinforced prepreg sheet is cut in the direction orthogonal to the longitudinal direction thereof, such that the prepreg sheet has a length of at least 300 mm in the longitudinal direction, and a straight line orthogonal to the line of cutting is set approximately in the central portion in the short fiber-reinforced prepreg sheet. Thereafter, the arbitrarily set straight line is moved toward both ends in the width direction by 0.5 mm at a time, and two straight lines at which the ratio of the portions where the chopped fiber bundles are present and absent are closest to 50%:50%, when the short fiber-reinforced prepreg sheet is seen from the upper surface thereof, are taken as the ends of the short fiber-reinforced prepreg sheet, and the distance between these straight lines is measured, to be taken as the width of the short fiber-reinforced prepreg sheet.

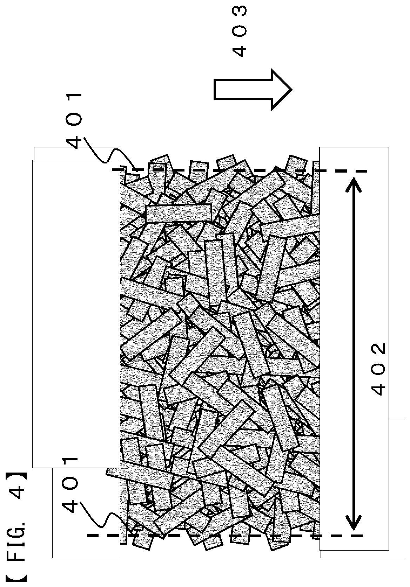

Further, as shown in FIG. 4, the width 402 of the chopped fiber-bundle deposit refers to the distance between two straight lines at both ends 401 of the chopped fiber-bundle deposit, at which the ratio of the portions where the chopped fiber bundles are present and absent are 50%:50% and which are parallel to the direction of travel 403 of the first conveyor, when the chopped fiber-bundle deposit is seen from the upper surface thereof. When the chopped fiber-bundle deposit is being stably and successfully produced, the width of the chopped fiber-bundle deposit is stabilized when the width is calculated from a section of the chopped fiber-bundle deposit extending at least 300 mm in the longitudinal direction thereof. Therefore, the width of the chopped fiber-bundle deposit is defined as the width calculated from a section of the chopped fiber-bundle deposit extending at least 300 mm in the longitudinal direction thereof. Specifically, the width of the chopped fiber-bundle deposit is measured as follows. The chopped fiber-bundle deposit is cut in the direction orthogonal to the longitudinal direction thereof, such that the chopped fiber-bundle deposit has a length of at least 300 mm in the longitudinal direction, and a straight line orthogonal to the line of cutting is set approximately in the central portion in the chopped fiber-bundle deposit. Thereafter, the arbitrarily set straight line is moved toward both ends in the width direction by 0.5 mm at a time, and two straight lines at which the ratio of the portions where the chopped fiber bundles are present and absent are closest to 50%:50%, when the short fiber-reinforced prepreg sheet seen from the upper surface thereof, are taken as the ends of the chopped fiber-bundle deposit, and the distance between these straight lines is measured, to be taken as the width of the chopped fiber-bundle deposit.

At the time of scattering the chopped fiber bundles, it is desired that the scattering be performed within a scattering region having standing walls that restrict the scattering width at least in the width direction of the moving body. By performing the scattering in such a scattering region, the width of the chopped fiber-bundle deposit can be controlled. Further, the width of the chopped fiber-bundle deposit is preferably set smaller than the desired width of the short fiber-reinforced prepreg sheet, and larger than the coating width of the matrix resin. When the width of the chopped fiber-bundle deposit is set as described above, it is possible to achieve the desired width of the short fiber-reinforced prepreg sheet when pressurized from above and below in the impregnation step, and to reduce the leaking of the matrix resin from the ends.

In the short fiber-reinforced prepreg sheet according to the present invention, the coefficient of variation, CVa, of the basis weight of the short fiber-reinforced prepreg sheet over the entire width in the width direction thereof is 15% or less. The coefficient of variation, CVa, of the basis weight of the short fiber-reinforced prepreg sheet over the entire width in the width direction thereof, is a value defined as described below. At this time:

Na represents the number (integer) of partitions which makes the length of one unit closest to 100 mm when the short fiber-reinforced prepreg sheet is equally divided in the sheet width direction;

La represents the value obtained by dividing the sheet width (mm) by Na; and

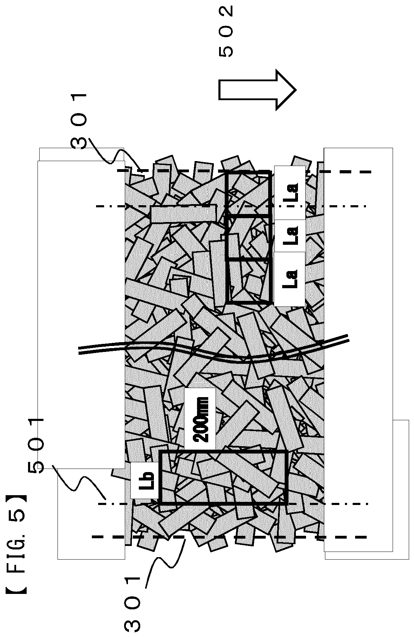

the coefficient of variation, CVa, of the basis weight of the short fiber-reinforced prepreg sheet over the entire width in the width direction thereof, represents the coefficient of variation (%) which is obtained by cutting out Na pieces of squares each having sides of La (mm) from the prepreg sheet so as to be adjacent with each other in the sheet width direction, as shown in FIG. 5, and calculating from the mass Wi (i = 1 to Na) of each of the regions of the thus cut out squares, using the following equations (1) and (2):

[Math 5]

$$ \mathrm{CVa}\,[\%] = \frac{1}{W_{ave}} \times \sqrt{\frac{\sum_1^{Na}\ (W_i{}^2 - W_{ave}{}^2)}{Na}} \times 100 \qquad (1) $$

[Math 6]

$$ \mathrm{Wave} = \sum_1^{Na} \frac{W_i}{Na} \qquad (2) $$

When the coefficient of variation, CVa, of the basis weight is small, the variation in the mass of the resulting product is decreased in the case of producing a molded article using the short fiber-reinforced prepreg sheet, and thus is preferred. Specifically, the CVa is 15% or less, preferably 10% or less, and more preferably 5% or less.

The "basis weight" ($g/m^2$) as described above refers to the mass per unit area. The basis weight of the short fiber-reinforced prepreg sheet can be determined by: measuring the mass of a sample which has been cut out by placing a cutting template having a predetermined size on the short fiber-reinforced prepreg sheet, or the mass of a sample which has been cut out to a predetermined size by a roller cutter; and dividing the mass of the sample by the sample area. The CVa can be controlled to 15% or less, for example, by a method in which the position(s) of introducing the fiber bundle(s) is/are adjusted in the width direction of the fiber-reinforced prepreg sheet, and the starting point(s) of scattering the chopped fiber bundles is/are adjusted in the width direction of the short fiber-reinforced prepreg sheet, or a method in which the chopped fiber bundles are uniformly distributed using a distributor.

In the short fiber-reinforced prepreg sheet according to the present invention, when a rectangular region having a size of Lb (mm) in the width direction and 200 mm in the longitudinal direction and being orthogonal to the direction of travel 303 of the first conveyor is provided along a boundary line 501 which is set (the average bundle length of the chopped fiber bundles/2) mm inward from each end 301 in the width direction of the short fiber-reinforced prepreg sheet, on the inner side of the short fiber-reinforced prepreg sheet with respect to the boundary line such that the long side of the rectangular region overlaps with the boundary line, as shown in FIG. 5, the basis weight of the rectangular region is 80% or more and 105% or less of the average basis weight of the short fiber-reinforced prepreg sheet over the entire width in the width direction thereof. At this time:

Nb represents the number (integer) of partitions which makes the length of one unit closest to 25 mm when the portion of the short fiber-reinforced prepreg sheet between the boundary lines at both end portions is equally divided in the sheet width direction; and
Lb represents the value obtained by dividing the length between the boundary lines at both end portions by Nb.

In the short fiber-reinforced prepreg sheet according to the present invention, when a rectangular region having a size of Lb (mm) in the width direction and 200 mm in the longitudinal direction is provided along a boundary line which is set (the average bundle length of the chopped fiber bundles/2) mm inward from each end in the width direction of the short fiber-reinforced prepreg sheet, on the inner side of the short fiber-reinforced prepreg sheet with respect to the boundary line such that the long side of the rectangular region overlaps with the boundary line, the basis weight of the rectangular region is 80% or more and 105% or less of the average basis weight of the short fiber-reinforced prepreg sheet over the entire width in the width direction thereof. The uniformity of the chopped fiber-bundle deposit and the condition of the basis weight of the end portions of the prepreg sheet vary, depending on the average bundle length of the chopped fiber bundles. Therefore, in the present invention, the basis weight of the prepreg sheet on the inner side of a boundary line which is set (the average bundle length of the chopped fiber bundles/2) mm inward from each end in the width direction of the short fiber-reinforced prepreg sheet, is controlled. More specifically, the basis weight of a rectangular region having a size of Lb (mm) in the width direction and 200 mm in the longitudinal direction, which is provided along the boundary line, on the inner side of the short fiber-reinforced prepreg sheet with respect to the boundary line such that the long side of the rectangular region overlaps with the boundary line, is controlled.

If the basis weight of the rectangular region is significantly low, the rectangular region cannot be used as a product portion. On the other hand, if the basis weight of the rectangular region is significantly higher than the average basis weight of the substrate, there is a risk that the end portions of the product after being wound may bulge to cause meandering during the winding of the roll, resulting in the occurrence of wrinkles in the substrate, or a possibility that defective impregnation may occur to cause dry fibers to mix into the resulting molded article, leading to the occurrence of defects. Therefore, in the short fiber-reinforced prepreg sheet according to the present invention, the basis weight of the rectangular region is 80% or more and 105% or less, preferably 90% or more and 105% or less, more preferably 95% or more and 105% or less, and still more preferably 97% or more and 103% or less, of the average basis weight of the short fiber-reinforced prepreg sheet over the entire width in the width direction thereof. When the basis weight of the rectangular region is within the range described above, the rectangular region can be included in the product portion of the short fiber-reinforced prepreg sheet. The basis weight of the rectangular region can be adjusted within the range described above, for example, by a method in which the position(s) of introducing the fiber bundle(s) is/are adjusted in the width direction of the fiber-reinforced prepreg sheet, and the starting point(s) of scattering the chopped fiber bundles is/are adjusted in the width direction of the short fiber-reinforced prepreg sheet, or a method in which the chopped fiber bundles are uniformly distributed using a distributor, and then, the chopped fiber-bundle deposit is passed through a mechanism for adjusting the basis weight of end portions, that adjusts the basis weight of the end portions in the width direction of the chopped fiber bundles that have been scattered, before being passed through the step of impregnating the deposit with the matrix resin.

The basis weight of the rectangular region can be determined by: measuring the mass (g) of a sample which has been cut out by placing a cutting template having a size of Lb (mm) in the width direction and 200 mm in the longitudinal direction, on the inner side of the short fiber-reinforced prepreg sheet with respect to the boundary line such that the long side of the rectangular region overlaps with the boundary line, or the mass of a sample obtained by providing a rectangular region having a predetermined size on the inner side of the short fiber-reinforced prepreg sheet with respect to the boundary line such that the long side of the rectangular region overlaps with the boundary line, and cutting out the rectangular region with a roller cutter; and dividing the mass of the sample by the sample area ($m^2$).

Further, the "average basis weight of the short fiber-reinforced prepreg sheet over the entire width in the width direction thereof" refers to the value obtained by: cutting the short fiber-reinforced prepreg sheet in the direction orthogonal to the longitudinal direction of the short fiber-reinforced prepreg sheet, such that the prepreg sheet has a length of 300 mm or more in the longitudinal direction thereof; then cutting the short fiber-reinforced prepreg sheet along the straight lines that define the width of the prepreg sheet to obtain a sample; measuring the mass of the sample; and dividing the measured mass of the sample, by the area calculated from the length of the sample in the width direction (prepreg sheet width) and the length of the sample in the longitudinal direction of the short fiber-reinforced prepreg sheet.

In the short fiber-reinforced prepreg sheet according to the present invention, it is preferred that an area of at least 10 mm extending outward from each end in the width direction of the short fiber-reinforced prepreg sheet is covered with a mold release film. In general, when the basis weight of the end portions in the width direction of the short fiber-reinforced prepreg sheet cannot be controlled, it is possible to cut off the end portions in the width direction of the short fiber-reinforced prepreg sheet and to remove the corresponding regions. However, when the end portions in the width direction of the short fiber-reinforced prepreg sheet are cut off, the ends of the mold release film become the same as the ends of the short fiber-reinforced prepreg sheet. As a result, there is a risk that the matrix resin may deteriorate due to the resin exuding from the ends at which the mold release film has been cut off, volatile components of the matrix resin vaporizing from the ends, or moisture or oxygen entering from the ends. Accordingly, a preferred embodiment of the present invention provides a short fiber-reinforced prepreg sheet in which the basis weight, and preferably Wf, can be controlled over the entire width of the short fiber-reinforced prepreg sheet, without cutting off the end portions in the width direction of the short fiber-reinforced prepreg sheet.

In the short fiber-reinforced prepreg sheet according to the present invention, the Wf (%) of the rectangular region provided on the inner side of the short fiber-reinforced prepreg sheet with respect to the boundary line is preferably 80% or more and 120% or less of the average Wf (%) of the short fiber-reinforced prepreg sheet over the entire width in the width direction thereof.

As described above, Wf represents the mass proportion of the reinforcing fibers contained in the short fiber-reinforced prepreg sheet. A lower Wf leads to a smaller reinforcing effect by the reinforcing fibers, whereas a higher Wf leads to a risk that defective impregnation may occur to cause the formation of a defective portion in the resulting molded article. On the other hand, a higher Wf leads a larger effect of improving the variation in the basis weight of the short fiber-reinforced prepreg sheet in the width direction thereof, in the present invention. Accordingly, the Wf of the short fiber-reinforced prepreg sheet is preferably 40% or more and 65% or less, more preferably 45% or more and 65% or less, and still more preferably, 50% or more 65% or less.

The Wf can be measured, for example, by the combustion method described in "Testing methods for carbon fiber content and void content of carbon fiber reinforced plastics" defined in JIS K 7075-1991, after collecting a sample from the short fiber-reinforced prepreg sheet. When the sample has a large size, the measurement of Wf is performed for samples divided in smaller pieces.

The "average Wf of the short fiber-reinforced prepreg sheet over the entire width in the width direction thereof" refers to the value obtained by: cutting the short fiber-reinforced prepreg sheet in the direction orthogonal to the longitudinal direction of the short fiber-reinforced prepreg sheet, such that the prepreg sheet has a length of 300 mm or more in the longitudinal direction thereof; then cutting the short fiber-reinforced prepreg sheet along the straight lines that define the width of the prepreg sheet to obtain a sample; and measuring the sample by the method of measuring Wf described above.

When the Wf of the rectangular region is lower than the average Wf of the short fiber-reinforced prepreg sheet, it leads to a decrease in the Wf of the molded article including the rectangular region, resulting in a decrease in the strength of the molded article, and therefore, the rectangular region cannot be included in the product portion. When the Wf of the rectangular region is higher than the average Wf of the short fiber-reinforced prepreg sheet, on the other hand, it leads to a decrease in impregnation property, resulting in the occurrence of molding defects in the molded article including the rectangular region, and therefore, the rectangular region cannot be included in the product portion. Accordingly, the Wf (%) of the rectangular region is preferably 80% or more and 120% or less, more preferably 90% or more and 110% or less, still more preferably 95% or more and 105% or less, and yet still more preferably 97% or more and 103% or less, of the average Wf (%) of the short fiber-reinforced prepreg sheet. The average Wf can be controlled within the range described above, as with the method of adjusting the average basis weight within the range described above, for example, by a method in which the position(s) of introducing the fiber bundle(s) is/are adjusted in the width direction of the fiber-reinforced prepreg sheet, and the starting point(s) of scattering the chopped fiber bundles is/are adjusted in the width direction of the short fiber-reinforced prepreg sheet, or a method in which the chopped fiber bundles are uniformly distributed using a distributor, and then, the chopped fiber-bundle deposit is passed through a mechanism for adjusting the basis weight of end portions, that adjusts the basis weight of the end portions in the width direction of the chopped fiber bundles that have been scattered, before being passed through the step of impregnating the deposit with the matrix resin.

In the short fiber-reinforced prepreg sheet according to the present invention, when Nb pieces of rectangular regions each having a size of Lb (mm) × 200 mm are cut out so as to be adjacent with each other in the width direction, from the portion of the prepreg sheet between the boundary lines at both end portions, such that the long sides of the rectangular regions are parallel to the boundary lines, the basis weight of each of all the rectangular regions is preferably 80% or more and 120% or less of the average basis weight of the short fiber-reinforced prepreg sheet over the entire width in the width direction thereof.

When Nb pieces of rectangular regions each having a size of Lb (mm) × 200 mm are cut out so as to be adjacent with each other in the width direction, from the portion of the prepreg sheet between the boundary lines at both end portions, such that the long sides of the rectangular regions are parallel to the boundary lines, and if there is any rectangular region having a low or a high basis weight, the mass of the resulting molded article including the region varies. Accordingly, when Nb pieces of rectangular regions each having a size of Lb (mm) × 200 mm are cut out so as to be adjacent with each other in the width direction, from the portion of the prepreg sheet between the boundary lines at both end portions, such that the long sides of the rectangular regions are parallel to the boundary lines, the basis weight of each of all the rectangular regions is preferably 80% or more and 120% or less, more preferably 90% or more and 110% or less, still more preferably 95% or more and 105% or less, and yet still more preferably 97% or more and 103% or less, of the average basis weight of the short fiber-reinforced prepreg sheet over the entire width in the width direction thereof. The average basis weight can be controlled within the range described above, as with the method of adjusting the average basis weight within the range described above, for example, by a method in which the position(s) of introducing the fiber bundle(s) is/are adjusted in the width direction of the fiber-reinforced prepreg sheet, and the starting point(s) of scattering the chopped fiber bundles is/are adjusted in the width direction of the short fiber-reinforced prepreg sheet, or a method in which the chopped fiber bundles are uniformly distributed using a distributor, and then, the chopped fiber-bundle deposit is passed through a mechanism for adjusting the basis weight of end portions, that adjusts the basis weight of the end portions in the width direction of the chopped fiber bundles that have been scattered, before being passed through the step of impregnating the deposit with the matrix resin.

In the short fiber-reinforced prepreg sheet according to the present invention, when two pieces of regions each having a width of Lb (mm) and a length of 200 mm are cut out, in order, from the end in the width direction of the short fiber-reinforced prepreg sheet in the inward direction of the short fiber-reinforced prepreg sheet, the rectangular region on the end portion side of the short fiber-reinforced prepreg sheet preferably has a lower basis weight. The basis weights of these rectangular regions can be controlled to the state as described above, as with the method of adjusting the average basis weight within the range described above, for example, by a method in which the position(s) of introducing the fiber bundle(s) is/are adjusted in the width direction of the fiber-reinforced prepreg sheet, and the starting point(s) of scattering the chopped fiber bundles is/are adjusted in the width direction of the short fiber-reinforced prepreg sheet, or a method in which the chopped fiber bundles are uniformly distributed using a distributor, and then, the chopped fiber-bundle deposit is passed through a mechanism for adjusting the basis weight of end portions, that adjusts the basis weight of the end portions in the width direction of the chopped fiber bundles that have been scattered, before being passed through the step of impregnating the deposit with the matrix resin.

When two pieces of rectangular regions each having a width of Lb (mm) and a length of 200 mm are cut out, in order, from the boundary line in the width direction of the short fiber-reinforced prepreg sheet, so as to be adjacent with each other in the inward direction of the short fiber-reinforced prepreg sheet, and such that the long sides of the rectangular regions are parallel to the longitudinal direction of the prepreg sheet, and in cases where the rectangular region on the inner side of the short fiber-reinforced prepreg sheet has a basis weight higher than the basis weight of the rectangular region on the end portion side thereof, the short fiber-reinforced prepreg sheet is less likely to meander during winding. Further, wrinkles are less likely to occur in the short fiber-reinforced prepreg sheet even in cases where the winding amount of the prepreg sheet is increased, allowing the wound form of the short fiber-reinforced prepreg sheet more easily stabilized. Moreover, such an arrangement makes it possible to more easily reduce defects during molding due to dry fibers, because, when the end portion of the short fiber-reinforced prepreg sheet has a large basis weight, there is a possibility that an unimpregnated portion may remain to cause the occurrence of dry fibers.

In the short fiber-reinforced prepreg sheet according to the present invention, the reinforcing fibers are preferably carbon fibers. When the reinforcing fibers are carbon fibers, a higher strength and a lower variation in the physical properties are more likely to be obtained.

In the short fiber-reinforced prepreg sheet according to the present invention, the chopped fiber bundles preferably have an average bundle length of 5 mm or more and 100 mm or less. When the chopped fiber bundles have an average bundle length of 5 mm or more, the reinforcing effect is more easily obtained. Further, when the chopped fiber bundles have an average bundle length of 100 mm or less, a better fluidity and formability are more likely to be obtained. The chopped fiber bundles more preferably have an average bundle length of 10 mm or more and 30 mm or less.

In the short fiber-reinforced prepreg sheet according to the present invention, the average basis weight of the short fiber-reinforced prepreg sheet over the entire width in the width direction thereof is preferably from 1,000 g/m$^2$ to 4,000 g/m$^2$. When the average basis weight of the short fiber-reinforced prepreg sheet over the entire width in the width direction thereof is 1,000 g/m$^2$ or more, a molded article can be produced efficiently. When the average basis weight is 4,000 g/m$^2$ or less, a better impregnation property is more likely to be obtained.

The method of producing a short fiber-reinforced prepreg sheet, according to the present invention includes:

a scattering step of scattering the chopped fiber bundles on a moving body that moves continuously in the downstream direction of the production process, to obtain a chopped fiber-bundle deposit; and

an impregnation step of impregnating the chopped fiber-bundle deposit with a matrix resin, by layering a film coated with the matrix resin, on at least one side of the chopped fiber-bundle deposit;

wherein the chopped fiber-bundle deposit is passed through a mechanism for adjusting the basis weight of end portions, that adjusts the basis weight of the end portions in the width direction of the chopped fiber bundles that have been scattered, before being passed through the impregnation step. In the method of producing a short fiber-reinforced prepreg sheet according to the present invention, it is possible to control the basis weight of the short fiber-reinforced prepreg sheet in the width direction thereof, while reducing the influence of the fiber orientation and maintaining the uniformity of the matrix resin in the width direction, by adjusting the basis weight of the end portions in the width direction of the chopped fiber-bundle deposit, before passing the chopped fiber-bundle deposit through the step of impregnating the deposit with the matrix resin.

The method of producing a short fiber-reinforced prepreg sheet according to the present invention preferably includes, before the scattering step, a cutting step of cutting the reinforcing fibers to form chopped fiber bundles.

In the first preferred embodiment of the method of producing a short fiber-reinforced prepreg sheet according to the present invention, the mechanism for adjusting the basis weight of end portions is a mechanism that, after the completion of the scattering step performed within a scattering region having standing walls that restrict both end portions in the width direction of the moving body, spreads and levels the chopped fiber bundles included in high basis weight regions formed at both end portions in the width direction of the chopped fiber-bundle deposit, outward in the width direction. When the scattering of the chopped fiber bundles is performed within the scattering region having standing walls that restrict the scattering width in the width direction of the moving body, the chopped fiber bundles which have come into contact with the surfaces of the standing walls that restrict the scattering width, during the scattering, deposit immediately below the standing walls, to form regions with a locally high basis weight, even in cases where it is intended to maintain the basis weight of the end portions of the chopped fiber-bundle deposit at a level equal to that of the central portion. Therefore, in the first preferred embodiment of the method of producing a short fiber-reinforced prepreg sheet according to the present invention, it is possible to eliminate the regions with a locally high basis weight, of the chopped fiber-bundle deposit, formed by the chopped fiber bundles deposited immediately below the standing walls, and to prepare a chopped fiber-bundle deposit having a uniform basis weight over the entire region extending to the end portions, by spreading and leveling the chopped fiber bundles included in high basis weight regions formed at both end portions in the width direction of the chopped fiber-bundle deposit, outward in the width direction. As a result, it is possible to provide a short fiber-reinforced prepreg sheet in which the basis weight of the end portions of the short fiber-reinforced prepreg sheet is controlled, in which the variation in the basis weight of the short fiber-reinforced prepreg sheet in the width direction thereof is small, and which has a low loss width relative to the product width.

In the first preferred embodiment of the method of producing a short fiber-reinforced prepreg sheet according to the present invention, the mechanism for adjusting the basis weight of end portions is preferably a mechanism that, after the completion of the scattering step performed within a scattering region having standing walls that restrict both end portions in the width direction of the moving body, spreads and levels the chopped fiber bundles included in high basis weight regions formed at the both end portions, outward in the width direction, by baffle plates or rolls disposed on the downstream side of the scattering region such that the baffle plates or rolls extend outwardly toward the downstream direction.

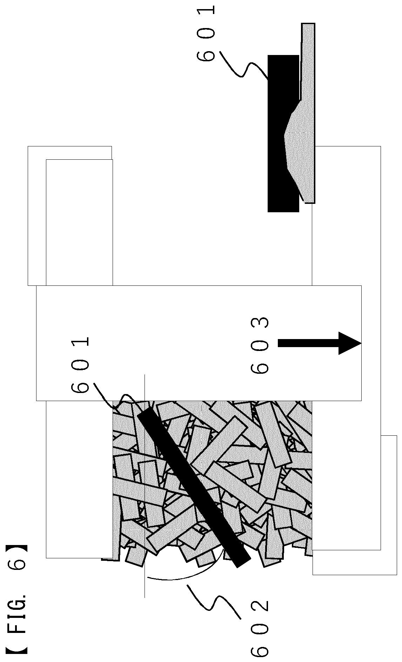

As illustrated in FIG. 6, by disposing baffle plates or rolls 601 on the downstream side of the scattering region for scattering the chopped fiber bundles such that the baffle plates or rolls extend outwardly toward the direction of travel 603 of the moving body, the regions with a locally high basis weight formed at both end portions of the chopped fiber-bundle deposit by the chopped fiber bundles which have come into contact with the standing walls that restrict the scattering width during the scattering and deposited immediately below the standing walls, can be eliminated. As a result, it is possible to provide a short fiber-reinforced prepreg sheet in which the basis weight of the end portions of the short fiber-reinforced prepreg sheet is controlled, in which the variation in the basis weight of the short fiber-reinforced prepreg sheet in the width direction thereof is small, and which has a low loss width relative to the product width.

The baffle plates or rolls are preferably made of a material which has a smooth surface and which is non-static, but not particularly limited thereto. If the baffle plates or rolls are made of such a material, it is possible to reduce the adhesion of the chopped fiber bundles on the surfaces of the baffle plates or rolls, when the baffle plates or rolls have come into contact with the chopped fiber-bundle deposit.

Further, the value of the angle (angle 602 in FIG. 6) formed by each baffle plate or roll and the width direction of the moving body can be 0° or more and less than 90°, but is preferably 10° or more and less than 80°, when seen from the upper surface in the vertical direction of the moving body. By installing the baffle plates or rolls at such an angle, the chopped fiber bundles in the regions with a locally high basis weight can be moved continuously to the outer side of the chopped fiber bundles.

The size of the baffle plates or rolls is not particularly limited. However, the baffle plates or rolls preferably have a width capable of restricting the height of the chopped fiber-bundle deposit, when installed, from the regions with a locally high basis weight formed immediately below the standing walls, to the region to which the chopped fiber bundles are moved. When the baffle plates or rolls have such a width, the chopped fiber bundles in the regions with a locally high basis weight can be moved continuously to the outer side of the chopped fiber bundles.

The height at which the baffle plates or rolls are installed is preferably such that the lower ends of the baffle plates or rolls coincide with, or are higher than, the height of a region with a target basis weight, and is preferably lower than the height of the regions with a locally high basis weight formed by the chopped fiber bundles deposited immediately below the standing walls. When the baffle plates or rolls are installed at such a height, the chopped fiber bundles in the regions with a locally high basis weight can be moved continuously to the outer side of the chopped fiber bundles.

In the first preferred embodiment of the method of producing a short fiber-reinforced prepreg sheet according to the present invention, a plurality of the baffle plates or rolls may be disposed such that the heights of the baffle plates or rolls at their lowermost ends gradually get lower toward the downstream direction. By providing a plurality of the baffle plates or rolls in this manner, the chopped fiber bundles can be gradually moved in the direction of the end portions.

The height of the baffle plates or the diameter of the rolls is not particularly limited, as long as it is sufficiently large with respect to the difference between the height of the regions with a locally high basis weight formed by the chopped fiber bundles deposited immediately below the standing walls and the height of the region with a target basis weight, and the height or the diameter is preferably equal to or more than twice the difference between the above heights.

In the second preferred embodiment of the method of producing a short fiber-reinforced prepreg sheet according to the present invention, the mechanism for adjusting the basis weight of end portions is standing walls that have a section in which the distance between the standing walls gradually increases toward the downstream of the production process, in the scattering step performed within a scattering region having standing walls that restrict both end portions in the width direction of the moving body.

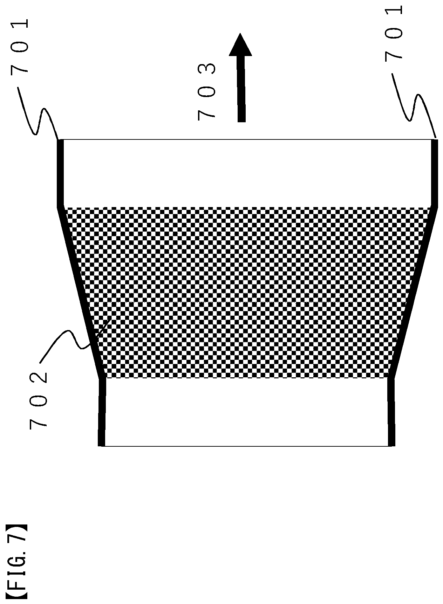

As illustrated in FIG. 7, by performing the scattering step within the scattering region having standing walls 701 that restrict both end portions in the width direction of the moving body, and allowing the standing walls to have a section (gradual increase section 702 in FIG. 7) in which the distance between the standing walls gradually increases toward the direction of travel 703 of the moving body, the portions formed at both end portions of the chopped fiber-bundle deposit by the chopped fiber bundles which have come into contact with the standing walls that restrict the scattering width during the scattering and deposited, can be distributed in the width direction of the fiber-bundle deposit, and the formation of the regions with a locally high basis weight at the end portions of the chopped fiber bundles can be prevented. As a result, it is possible to provide a short fiber-reinforced prepreg sheet in which the basis weight of the end portions of the short fiber-reinforced prepreg sheet is controlled, in which the variation in the basis weight of the short fiber-reinforced prepreg sheet in the width direction thereof is small, and which has a low loss width relative to the product width.

The length of the gradual increase section in the moving direction of the moving body is not particularly limited. However, it is preferred that the standing walls do not have the gradual increase region at the end portion of the scattering region in the downstream direction of the moving body, and it is preferred that the standing walls have a section in which the standing walls are parallel to the downstream direction of the moving body and which has a length of 3% or more with respect to the length of the scattering region in the moving direction of the moving body is provided, at the end portion of the scattering region in the downstream direction of the moving body. Such a configuration stabilizes the basis weight of the end portions of the chopped fiber-bundle deposit.

The width of gradual increase of the distance between the standing walls is preferably 10% or more and 500% or less with respect to the average bundle length of the chopped fiber bundles, but not particularly limited thereto. When the width of gradual increase is adjusted within the range described above, the basis weight of the end portions of the chopped fiber-bundle deposit is more easily stabilized.

In the third preferred embodiment of the method of producing a short fiber-reinforced prepreg sheet according to the present invention, the mechanism for adjusting the basis weight of end portions is obstacles that are provided on the inner sides of the standing walls and that prevent the chopped fiber bundles from colliding with the standing walls, in the scattering step performed within a scattering region having standing walls that restrict both end portions in the width direction of the moving body.

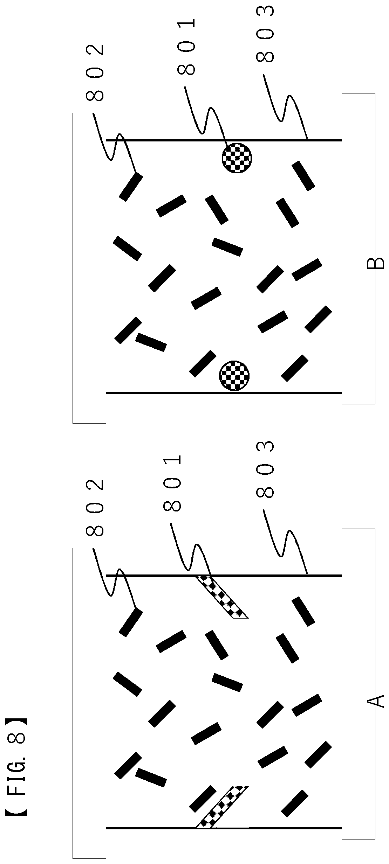

As illustrated in FIG. 8, by providing obstacles 801 that prevent the chopped fiber bundles from colliding with the standing walls 803 on the inner sides of the standing walls 803, and preventing at least some of the chopped fiber bundles 802 supposed to come into contact with the standing walls from coming into contact with the standing walls and depositing immediately below the standing walls by the presence of the obstacles, the formation of the regions with a locally high basis weight at the end portions of the chopped fiber-bundle deposit can be reduced. As a result, it is possible to provide a short fiber-reinforced prepreg sheet in which the basis weight of the end portions of the short fiber-reinforced prepreg sheet is controlled, in which the variation in the basis weight of the short fiber-reinforced prepreg sheet in the width direction thereof is small, and which has a low loss width relative to the product width.

The obstacles are not particularly limited as long as at least some of the chopped fiber bundles supposed to come into contact with the standing walls can be prevented from coming into contact. However, the obstacles are preferably those which have a smooth surface and which are non-static. Further, the obstacles are preferably installed in a tilted manner so that the chopped fiber bundles do not deposit thereon.

The form of the obstacles is not particularly limited. For example, the obstacles may be in the form of cylindrical columns or flat plates protruding diagonally downward from the standing walls, in the form of cylindrical columns provided in the vicinity of the standing walls in the scattering region and extending horizontally in the downstream direction of the moving body, or flat plates installed at an angle so that the chopped fiber bundles accumulated thereon can be scattered on the inner side in the width direction of the moving body.

The flat plates installed at an angle preferably have a mechanism for varying the extent of protrusion from the walls. Such a mechanism allows for a fine control of the basis weight of the end portions in the width direction.

Examples

The present invention will now be described more specifically with reference to Examples. It is noted, however, that the present invention is in no way limited to these Examples.

The following matrix resin and chopped fiber bundles were used in the Examples and Comparative Examples.

Matrix Resin:

A resin obtained by mixing 100 parts by mass of a vinyl ester resin (VE) resin ("DERAKANE 790" (registered trademark); manufactured by The Dow Chemical Company), 1 part by mass of tert-butyl peroxybenzoate ("PERBUTYL Z" (registered trademark), manufactured by NOF Corporation), 2 parts by mass of zinc stearate (SZ-2000; manufactured by Sakai Chemical Industry Co., Ltd.) and 4 parts by mass of magnesium oxide (MgO #40; manufactured by Kyowa Chemical Industry Co., Ltd.) was used.

Chopped Fiber Bundles:

A continuous carbon fiber strand having a number of filaments of 50,000 (product name: "ZOLTEK (registered trademark) "PX35-50K, manufactured by ZOLTEC Corporation) was used as the reinforcing fiber bundle. Chopped fiber bundles were obtained by cutting the reinforcing fiber bundle at right angles with respect to the longitudinal direction of the reinforcing fiber bundle, using a cutter, such that the resulting chopped fiber bundles have a length of 12.7 mm.

(Example 1)

Mold release films made of polypropylene were unwound from rolls, and the matrix resin was uniformly coated on the upper surface of each film, using a doctor blade, while adjusting the amount of coating and the coating width, to prepare two resin sheets. At this time, each resin sheet had a coating basis weight of the resin of 430 $g/m^2$ and a coating width of 1,490 mm.

The chopped fiber bundles were scattered on the matrix resin on the first mold release film as the moving body, which film had been continuously drawn out while coating the matrix resin on the upper surface thereof, within a scattering region having standing walls that restrict the scattering width in the width direction of the moving body, to form a chopped fiber-bundle deposit on the moving body.

The scattering region was a space having a maximum distance between the standing walls of 1,495 mm, and extending 1,000 mm in the downstream direction and 1,000 mm in the height direction.

Since the chopped fiber bundles prepared by cutting the reinforcing fiber bundles which had been introduced in a state arranged in a row at regular intervals in the width direction of the moving body, were scattered, at this time, the starting positions of scattering the chopped fiber bundles were also arranged in a row at regular intervals in the width direction of the moving body. Further, the chopped fiber-bundle deposit had a basis weight of 1,140 $g/m^2$.

Within the scattering region, the chopped fiber bundles were distributed by a distributor, and then scattered by allowing the chopped fiber bundles to fall on the matrix resin on the first mold release film, to continuously form the chopped fiber-bundle deposit in which the chopped fiber bundles are randomly orientated. The distributor used was one composed of 16 wires provided at regular intervals on a circle having a diameter of 200 mm and centered on the rotation axis, in which the wires extend over the width direction of the scattering region. The distributor was disposed directly below the reinforcing fiber bundle cutter, such that the rotation axis of the distributor was horizontal and extended in the width direction of the moving body. The distributor was rotated at a speed of 400 rpm in the clockwise direction with respect to the rotation axis of the distributor, when the direction of rotation of the distributor was seen from the right-hand side seen from the upstream side of the moving body, to distribute the scattered chopped fiber bundles within the scattering region.

The standing walls that restrict the scattering width in the width direction of the moving body, in the scattering region, had a parallel section extending 200 mm, a gradual increase section extending 300 mm and a parallel section extending 500 mm, from the upstream toward the downstream direction, and the width of gradual increase in the gradual increase section was 25 mm. The gradual increase section of the standing walls was set as described above, so that the chopped fiber bundles which had come into contact with the standing wall surfaces and deposited immediately below the standing wall surfaces were distributed in the width direction of the moving body.

The chopped fiber-bundle deposit obtained as described above had a width of 1,495 mm. In the thus obtained chopped fiber-bundle deposit, high basis weight regions formed by the chopped fiber bundles which had come into contact with the standing wall surfaces and deposited immediately below the standing wall surfaces were not observed.

Subsequently, the second mold release film was disposed on the upper surface of the chopped fiber-bundle deposit, in a state in which the matrix resin-coated surface of the film constitutes the lower surface in the vertical direction, to sandwich the chopped fiber-bundle deposit with the first mold release film and the second mold release film, from the lower and upper surfaces. Thereafter, the matrix resin was impregnated into the chopped fiber-bundle deposit by compaction rolls, wound on a paper tube, and the viscosity of the resin was increased at 40°C for 24 hours, to obtain an SMC. The resulting SMC had a width of 1,500 mm.

Fifteen pieces of 100 mm × 100 mm squares were cut out from the end in the width direction of the resulting SMC, in the width direction of the SMC, and the coefficient of variation, CVa, of the basis weight of the short fiber-reinforced prepreg sheet over the entire width in the width direction thereof was calculated. As a result, the CVA was 4.6%.

Further, the resulting SMC was cut in the width direction of the SMC so as to have a length in the longitudinal direction of 300 mm, and the average basis weight over the entire width in the width direction and the average Wf over the entire width in the width direction of the SMC were calculated. As a result, the average basis weight was 2,000 g/m$^2$, and the average Wf was 57%.

A boundary line was set 6.35 mm inward from each end in the width direction of the resulting SMC, then a rectangular region having a size of 24.79 mm in the width direction and 200 mm in the longitudinal direction of the SMC was provided such that the long side of the rectangular region overlaps with the boundary line, on the inner side of the short fiber-reinforced prepreg sheet with respect to the boundary line, and the basis weight and the Wf of the rectangular region was calculated. As a result, the basis weight of the rectangular region was 1,920 g/m$^2$, which was 96% of the average basis weight of the SMC over the entire width in the width direction thereof. Further, the Wf of the rectangular region was 56%, which was 98% of the average Wf of the SMC over the entire width in the width direction thereof.

When 60 pieces of rectangular regions each having a size of 24.79 mm in the width direction of the SMC × 200 mm in the longitudinal direction of the SMC were cut out from the boundary line of the resulting SMC, the basis weight of each of all the rectangular regions was 95% or more and 104% or less of the average basis weight.

Further, when two pieces of rectangular regions each having a size of 24.79 mm in the width direction of the SMC × 200 mm in the longitudinal direction of the SMC were cut out so as to be adjacent with each other from the boundary line of the resulting SMC toward the central portion in the width direction of the SMC, the basis weight of the rectangular region on the endmost portion was lower than that of the region on the inner side thereof.

The presence or absence of the standing walls, the type of the mechanism for adjusting end portions, the evaluation results and the like in Examples 1 to 4 as well as Comparative Examples 1 and 2 are shown in Table 1.

[Table 1]

|  | Example 1 | Example 2 | Example 3 | Example 4 | Comparative Example 1 | Comparative Example 2 |
|---|---|---|---|---|---|---|
| Standing walls | Present | Present | Present | Present | Present | Present |

(continued)

| | Example 1 | Example 2 | Example 3 | Example 4 | Comparative Example 1 | Comparative Example 2 |
|---|---|---|---|---|---|---|
| Mechanism for adjusting basis weight of end portions | Standing walls having gradual increase section | Baffle plates | Cylindrical columns protruding diagonally downward from side surfaces of standing walls | Flat plates protruding downward from standing walls | Absent | Absent |
| CVa | 4.6% | 5.2% | 6.1% | 3.8% | 7.8% | 7.8% |
| Basis weight of rectangular region whose long side overlaps with boundary line, with respect to average basis weight | 96% | 96% | 97% | 101% | 106% | 78% |
| Wf of rectangular region whose long side overlaps with boundary line, with respect to average Wf | 98% | 98% | 98% | 100% | 105% | 79% |
| Basis weight of each of all rectangular regions with respect to average basis weight of short fiber-reinforced prepreg sheet over the entire width in the width direction thereof, when Nb pieces of rectangular regions were cut out so as to be adjacent with each other | 95% or more and 104% or less | 93% or more and 105% or less | 94% or more and 105% or less | 98% or more and 103% or less | 80% or more and 120% or less | 80% or more and 120% or less |
| Basis weight of rectangular region on the end portion side of short fiber-reinforced prepreg sheet, when two pieces of rectangular regions were cut in order from the end portion in the width direction in the inward direction of the short fiber-reinforced prepreg sheet | Low | Low | Low | Low | High | High |

(Example 2)

Mold release films made of polypropylene were unwound from rolls, and the matrix resin was uniformly coated on the upper surface of each film, using a doctor blade, while adjusting the amount of coating and the coating width, to prepare two resin sheets. At this time, each resin sheet had a coating basis weight of the resin of 430 $g/m^2$ and a coating width of 1,490 mm.

The chopped fiber bundles were scattered on the matrix resin on the first mold release film as the moving body, which film had been continuously drawn out while coating the matrix resin on the upper surface thereof, within a scattering region having standing walls that restrict the scattering width in the width direction of the moving body, to form a chopped fiber-bundle deposit on the moving body.

Since the chopped fiber bundles prepared by cutting the reinforcing fiber bundles which had been introduced in a state arranged in a row at regular intervals in the width direction of the moving body, were scattered, at this time, the starting positions of scattering the chopped fiber bundles were also arranged in a row at regular intervals in the width direction of the moving body. Further, the chopped fiber-bundle deposit had a basis weight of 1,140 g/m$^2$.

Within the scattering region, the chopped fiber bundles were distributed by a distributor, and then scattered by allowing the chopped fiber bundles to fall on the matrix resin on the first mold release film, to continuously form the chopped fiber-bundle deposit in which the chopped fiber bundles are randomly orientated. The distributor used was one composed of 16 wires provided at regular intervals on a circle having a diameter of 200 mm and centered on the rotation axis, in which the wires extend over the width direction of the scattering region. The distributor was disposed directly below the reinforcing fiber bundle cutter, such that the rotation axis of the distributor was horizontal and extended in the width direction of the moving body. The distributor was rotated at a speed of 400 rpm in the clockwise direction with respect to the rotation axis of the distributor, when the direction of rotation of the distributor was seen from the right-hand side seen from the upstream of the moving body, to distribute the scattered chopped fiber bundles within the scattering region.

The scattering region was a space having a distance between the standing walls of 1,495 mm, and extending 1,000 mm in the downstream direction and 1,000 mm in the height direction.

The standing walls that restrict the scattering width in the width direction of the moving body, in the scattering region, were parallel to the downstream direction of the moving body, and did not have a section in which the distance between the standing walls gradually increases. In the resulting chopped fiber-bundle deposit, high basis weight regions were formed at the end portions of the chopped fiber-bundle deposit, by the chopped fiber bundles which had come into contact with the standing wall surfaces and deposited immediately below the standing wall surfaces. The height of the high basis weight regions of the chopped fiber-bundle deposit was 20 mm, and the height of the region other than those was 15 mm.

Subsequently, the chopped fiber bundles included in the high basis weight regions of the resulting chopped fiber-bundle deposit were moved to the end portion sides of the chopped fiber-bundle deposit end portion, using baffle plates. The baffle plates are flat plates made of stainless steel, each having a thickness of 2 mm, a width of 150 mm and a height of 70 mm, and were installed such that the lower ends of the plates in the height direction were at a height of 16 mm. At this time, the angle formed by each baffle plate or roll and the width direction of the moving body was 45°. Further, the central position in the width direction of each baffle plate and the center of each standing wall were present on a straight line in the downstream direction of the moving body. The chopped fiber bundles included in the high basis weight regions of the chopped fiber-bundle deposit were moved by the baffle plates to the end portion sides of the chopped fiber-bundle deposit, and the basis weight of the high basis weight regions became equal to the usual basis weight.

The chopped fiber-bundle deposit obtained as described above had a width of 1,495 mm.

Subsequently, the second mold release film was disposed on the upper surface of the chopped fiber-bundle deposit, in a state in which the matrix resin-coated surface of the film constitutes the lower surface in the vertical direction, to sandwich the chopped fiber-bundle deposit with the first mold release film and the second mold release film, from the lower and upper surfaces. Thereafter, the matrix resin was impregnated into the chopped fiber-bundle deposit by compaction rolls, wound on a paper tube, and the viscosity of the resin was increased at 40°C for 24 hours, to obtain an SMC. The resulting SMC had a width of 1,500 mm.

Fifteen pieces of 100 mm × 100 mm squares were cut out from the end in the width direction of the resulting SMC, in the width direction of the SMC, and the coefficient of variation, CVa, of the basis weight of the short fiber-reinforced prepreg sheet over the entire width in the width direction thereof was calculated. As a result, the CVA was 5.2%.

Further, the resulting SMC was cut in the width direction of the SMC so as to have a length in the longitudinal direction of 300 mm, and the average basis weight over the entire width in the width direction and the average Wf over the entire width in the width direction of the SMC were calculated. As a result, the average basis weight was 2,000 g/m$^2$, and the average Wf was 57%.

A boundary line was set 6.35 mm inward from each end in the width direction of the resulting SMC, then a rectangular region having a size of 24.79 mm in the width direction and 200 mm in the longitudinal direction of the SMC was provided such that the long side of the rectangular region overlaps with the boundary line, on the inner side of the short fiber-reinforced prepreg sheet with respect to the boundary line, and the basis weight and the Wf of the rectangular region was calculated. As a result, the basis weight of the rectangular region was 1,912 g/m$^2$, which was 96% of the average basis weight of the SMC over the entire width in the width direction thereof. Further, the Wf of the rectangular region was 56%, which was 98% of the average Wf of the SMC over the entire width in the width direction thereof.

When 60 pieces of rectangular regions each having a size of 24.79 mm in the width direction of the SMC × 200 mm in the longitudinal direction of the SMC were cut out from the boundary line of the resulting SMC, the basis weight of each of all the rectangular regions was 93% or more and 105% or less of the average basis weight.

Further, when two pieces of rectangular regions each having a size of 24.79 mm in the width direction of the SMC × 200 mm in the longitudinal direction of the SMC were cut out so as to be adjacent with each other from the boundary line of the resulting SMC toward the central portion in the width direction of the SMC, the basis weight of the rectangular region on the endmost portion was lower than that of the region on the inner side thereof.

(Example 3)

Mold release films made of polypropylene were unwound from rolls, and the matrix resin was uniformly coated on the upper surface of each film, using a doctor blade, while adjusting the amount of coating and the coating width, to prepare two resin sheets. At this time, each resin sheet had a coating basis weight of the resin of 430 g/m$^2$ and a coating width of 1,490 mm.

The chopped fiber bundles were scattered on the matrix resin on the first mold release film as the moving body, which film had been continuously drawn out while coating the matrix resin on the upper surface thereof, within a scattering region having standing walls that restrict the scattering width in the width direction of the moving body, to form a chopped fiber-bundle deposit on the moving body.

The scattering region was a space having a distance between the standing walls of 1,495 mm, and extending 1,000 mm in the downstream direction and 1,000 mm in the height direction.

Since the chopped fiber bundles prepared by cutting the reinforcing fiber bundles which had been introduced in a state arranged in a row at regular intervals in the width direction of the moving body, were scattered, at this time, the starting positions of scattering the chopped fiber bundles were also arranged in a row at regular intervals in the width direction of the moving body. Further, the chopped fiber-bundle deposit had a basis weight of 1,140 g/m$^2$.

Within the scattering region, the chopped fiber bundles were distributed by a distributor, and then scattered by allowing the chopped fiber bundles to fall on the matrix resin on the first mold release film, to continuously form the chopped fiber-bundle deposit in which the chopped fiber bundles are randomly orientated. The distributor used was one composed of 16 wires provided at regular intervals on a circle having a diameter of 200 mm and centered on the rotation axis, in which the wires extend over the width direction of the scattering region. The distributor was disposed directly below the reinforcing fiber bundle cutter, such that the rotation axis of the distributor was horizontal and extended in the width direction of the moving body. The distributor was rotated at a speed of 400 rpm in the clockwise direction with respect to the rotation axis of the distributor, when the direction of rotation of the distributor was seen from the right-hand side seen from the upstream of the moving body, to distribute the scattered chopped fiber bundles within the scattering region.

The standing walls that restrict the scattering width in the width direction of the moving body, in the scattering region, were parallel to the downstream direction of the moving body, and did not have a section in which the distance between the standing walls gradually increases.

Further, to each of the standing walls that restrict the scattering width in the width direction of the moving body, in the scattering region, 20 obstacles in the form of cylindrical columns protruding diagonally downward from the side surface of each standing wall were provided at regular intervals. Each obstacle in the form of a cylindrical column had a diameter of 20 mm and a protruding length of 100 mm, and the angle formed by the cylindrical column and the vertically downward direction was 60°.

The chopped fiber-bundle deposit obtained as described above had a width of 1,495 mm. In the thus obtained chopped fiber-bundle deposit, high basis weight regions formed by the chopped fiber bundles which had come into contact with the standing wall surfaces and deposited immediately below the standing wall surfaces were not observed.

Subsequently, the second mold release film was disposed on the upper surface of the chopped fiber-bundle deposit, in a state in which the matrix resin-coated surface of the film constitutes the lower surface in the vertical direction, to sandwich the chopped fiber-bundle deposit with the first mold release film and the second mold release film, from the lower and upper surfaces. Thereafter, the matrix resin was impregnated into the chopped fiber-bundle deposit by compaction rolls, wound on a paper tube, and the viscosity of the resin was increased at 40°C for 24 hours, to obtain an SMC. The resulting SMC had a width of 1,500 mm.

Fifteen pieces of 100 mm × 100 mm squares were cut out from the end in the width direction of the resulting SMC, in the width direction of the SMC, and the coefficient of variation, CVa, of the basis weight of the short fiber-reinforced prepreg sheet over the entire width in the width direction thereof was calculated. As a result, the CVA was 6.1%.

Further, the resulting SMC was cut in the width direction of the SMC so as to have a length in the longitudinal direction of 300 mm, and the average basis weight over the entire width in the width direction and the average Wf over the entire width in the width direction of the SMC were calculated. As a result, the average basis weight was 2,000 g/m$^2$, and the average Wf was 57%.

A boundary line was set 6.35 mm inward from each end in the width direction of the resulting SMC, then a rectangular region having a size of 24.79 mm in the width direction and 200 mm in the longitudinal direction of the SMC was provided such that the long side of the rectangular region overlaps with the boundary line, on the inner side of the short fiber-reinforced prepreg sheet with respect to the boundary line, and the basis weight and the Wf of the rectangular region was calculated. As a result, the basis weight of the rectangular region was 1,940 g/m$^2$, which was 97% of the average basis weight of the SMC over the entire width in the width direction thereof. Further, the Wf of the rectangular region was 56%, which was 98% of the average Wf of the SMC over the entire width in the width direction thereof.

When 60 pieces of rectangular regions each having a size of 24.79 mm in the width direction of the SMC × 200 mm in the longitudinal direction of the SMC were cut out from the boundary line of the resulting SMC, the basis weight of each of all the rectangular regions was 94% or more and 105% or less of the average basis weight.

Further, when two pieces of rectangular regions each having a size of 24.79 mm in the width direction of the SMC × 200 mm in the longitudinal direction of the SMC were cut out so as to be adjacent with each other from the boundary line of the resulting SMC toward the central portion in the width direction of the SMC, the basis weight of the rectangular region on the endmost portion was lower than that of the region on the inner side thereof.


(Example 4)

Mold release films made of polypropylene were unwound from rolls, and the matrix resin was uniformly coated on the upper surface of each film, using a doctor blade, while adjusting the amount of coating and the coating width, to prepare two resin sheets. At this time, each resin sheet had a coating basis weight of the resin of 430 g/m$^2$ and a coating width of 1,490 mm.

The chopped fiber bundles were scattered on the matrix resin on the first mold release film as the moving body, which film had been continuously drawn out while coating the matrix resin on the upper surface thereof, within a scattering region having standing walls that restrict the scattering width in the width direction of the moving body, to form a chopped fiber-bundle deposit on the moving body.

Since the chopped fiber bundles prepared by cutting the reinforcing fiber bundles which had been introduced in a state arranged in a row at regular intervals in the width direction of the moving body, were scattered, at this time, the starting positions of scattering the chopped fiber bundles were also arranged in a row at regular intervals in the width direction of the moving body. Further, the chopped fiber-bundle deposit had a basis weight of 1,140 g/m$^2$.

Within the scattering region, the chopped fiber bundles were distributed by a distributor, and then scattered by allowing the chopped fiber bundles to fall on the matrix resin on the first mold release film, to continuously form the chopped fiber-bundle deposit in which the chopped fiber bundles are randomly orientated. The distributor used was one composed of 16 wires provided at regular intervals on a circle having a diameter of 200 mm and centered on the rotation axis, in which the wires extend over the width direction of the scattering region. The distributor was disposed directly below the reinforcing fiber bundle cutter, such that the rotation axis of the distributor was horizontal and extended in the width direction of the moving body. The distributor was rotated at a speed of 400 rpm in the clockwise direction with respect to the rotation axis of the distributor, when the direction of rotation of the distributor was seen from the right-hand side seen from the upstream of the moving body, to distribute the scattered chopped fiber bundles within the scattering region.

The scattering region was a space having a distance between the standing walls of 1,495 mm, and extending 1,000 mm in the downstream direction and 1,000 mm in the height direction.

The standing walls that restrict the scattering width in the width direction of the moving body, in the scattering region, were parallel to the downstream direction of the moving body, and did not have a section in which the distance between the standing walls gradually increases. To the standing walls, four flat plates each having a width of 100 mm and a length of 100 mm were provided so as to protrude downward at an ang angle of 60° with respect to the standing wall surfaces, in order to prevent the chopped fiber bundles from colliding with standing walls and depositing immediately below the standing wall surfaces.

The chopped fiber-bundle deposit obtained as described above had a width of 1,495 mm. In the thus obtained chopped fiber-bundle deposit, high basis weight regions formed by the chopped fiber bundles which had come into contact with the standing wall surfaces and deposited immediately below the standing wall surfaces were not observed.

Subsequently, the second mold release film was disposed on the upper surface of the chopped fiber-bundle deposit, in a state in which the matrix resin-coated surface of the film constitutes the lower surface in the vertical direction, to sandwich the chopped fiber-bundle deposit with the first mold release film and the second mold release film, from the lower and upper surfaces. Thereafter, the matrix resin was impregnated into the chopped fiber-bundle deposit by compaction rolls, wound on a paper tube, and the viscosity of the resin was increased at 40°C for 24 hours, to obtain an SMC. The resulting SMC had a width of 1,500 mm.

Fifteen pieces of 100 mm × 100 mm squares were cut out from the end in the width direction of the resulting SMC, in the width direction of the SMC, and the coefficient of variation, CVa, of the basis weight of the short fiber-reinforced prepreg sheet over the entire width in the width direction thereof was calculated. As a result, the CVA was 3.8%.

Further, the resulting SMC was cut in the width direction of the SMC so as to have a length in the longitudinal direction of 300 mm, and the average basis weight over the entire width in the width direction and the average Wf over the entire width in the width direction of the SMC were calculated. As a result, the average basis weight was 2,000 g/m$^2$, and the average Wf was 57%.

A boundary line was set 6.35 mm inward from each end in the width direction of the resulting SMC, then a rectangular region having a size of 24.79 mm in the width direction and 200 mm in the longitudinal direction of the SMC was provided such that the long side of the rectangular region overlaps with the boundary line, on the inner side of the short fiber-reinforced prepreg sheet with respect to the boundary line, and the basis weight and the Wf of the rectangular region was calculated. As a result, the basis weight of the rectangular region was 2,010 g/m$^2$, which was 101% of the average basis weight of the SMC over the entire width in the width direction thereof. Further, the Wf of the rectangular region was 57%, which was 100% of the average Wf of the SMC over the entire width in the width direction thereof.

When 60 pieces of rectangular regions each having a size of 24.79 mm in the width direction of the SMC × 200 mm in the longitudinal direction of the SMC were cut out from the boundary line of the resulting SMC, the basis weight of each of all the rectangular regions was 98% or more and 103% or less of the average basis weight.

Further, when two pieces of rectangular regions each having a size of 24.79 mm in the width direction of the SMC × 200 mm in the longitudinal direction of the SMC were cut out so as to be adjacent with each other from the boundary line of the resulting SMC toward the central portion in the width direction of the SMC, the basis weight of the rectangular region on the endmost portion was lower than that of the region on the inner side thereof.

(Comparative Example 1)

An SMC was produced in the same manner as in Example 1, except that the scattering of the chopped fiber bundles was performed in a scattering region in which the standing walls that restrict the scattering width in the width direction of the moving body were parallel to the downstream direction of the moving body. In the resulting chopped fiber-bundle deposit, high basis weight regions were formed at the end portions of the chopped fiber-bundle deposit, by the chopped fiber bundles which had come into contact with the standing wall surfaces and deposited immediately below the standing wall surfaces. The height of the high basis weight regions of the chopped fiber-bundle deposit was 20 mm, and the height of the region other than those was 15 mm.

Fifteen pieces of 100 mm × 100 mm squares were cut out from the end in the width direction of the resulting SMC, in the width direction of the SMC, and the coefficient of variation, CVa, of the basis weight of the short fiber-reinforced prepreg sheet over the entire width in the width direction thereof was calculated. As a result, the CVA was 7.8%.

Further, the resulting SMC was cut in the width direction of the SMC so as to have a length in the longitudinal direction of 300 mm, and the average basis weight over the entire width in the width direction and the average Wf over the entire width in the width direction of the SMC were calculated. As a result, the average basis weight was 2,000 g/m$^2$, and the average Wf was 57%.

A boundary line was set 6.35 mm inward from each end in the width direction of the resulting SMC, then a rectangular region having a size of 24.79 mm in the width direction and 200 mm in the longitudinal direction of the SMC was provided such that the long side of the rectangular region overlaps with the boundary line, on the inner side of the short fiber-reinforced prepreg sheet with respect to the boundary line, and the basis weight and the Wf of the rectangular region was calculated. As a result, the basis weight of the rectangular region was 2,120 g/m$^2$, which was 106% of the average basis weight of the SMC over the entire width in the width direction thereof. Further, the Wf of the rectangular region was 60%, which was 105% of the average Wf of the SMC over the entire width in the width direction thereof.

When 60 pieces of rectangular regions each having a size of 24.79 mm in the width direction of the SMC × 200 mm in the longitudinal direction of the SMC were cut out from the boundary line of the resulting SMC, the basis weight of each of all the rectangular regions was 80% or more and 120% or less of the average basis weight.

Further, when two pieces of rectangular regions each having a size of 24.79 mm in the width direction of the SMC × 200 mm in the longitudinal direction of the SMC were cut out so as to be adjacent with each other from the boundary line of the resulting SMC toward the central portion in the width direction of the SMC, the basis weight of the rectangular region on the endmost portion was higher than that of the region on the inner side thereof.

(Comparative Example 2)

An SMC was produced in the same manner as in Example 1, except that the scattering of the chopped fiber bundles was performed in a scattering region in which the standing walls that restrict the scattering width in the width direction of the moving body were parallel to the downstream direction of the moving body, and that the intervals between the reinforcing fiber bundles to be introduced when cutting the fiber bundles were reduced and set to the positions closer to the center. In the resulting chopped fiber-bundle deposit, regions having a basis weight higher than that of neighboring regions were formed at the end portions of the chopped fiber-bundle deposit, by the chopped fiber bundles which had come into contact with the standing wall surfaces and deposited immediately below the standing wall surfaces. The height of the high basis weight regions of the chopped fiber-bundle deposit was 12 mm, and the height of the region other than those was 15 mm.

Fifteen pieces of 100 mm × 100 mm squares were cut out from the end in the width direction of the resulting SMC, in the width direction of the SMC, and the coefficient of variation, CVa, of the basis weight of the short fiber-reinforced prepreg sheet over the entire width in the width direction thereof was calculated. As a result, the CVA was 7.8%.

Further, the resulting SMC was cut in the width direction of the SMC so as to have a length in the longitudinal direction of 300 mm, and the average basis weight over the entire width in the width direction and the average Wf over the entire width in the width direction of the SMC were calculated. As a result, the average basis weight was 2,000 g/m$^2$, and the average Wf was 57%.

A boundary line was set 6.35 mm inward from each end in the width direction of the resulting SMC, then a rectangular region having a size of 24.79 mm in the width direction and 200 mm in the longitudinal direction of the SMC was provided such that the long side of the rectangular region overlaps with the boundary line, on the inner side of the short fiber-reinforced prepreg sheet with respect to the boundary line, and the basis weight and the Wf of the rectangular region was calculated. As a result, the basis weight of the rectangular region was 1,560 g/m$^2$, which was 78% of the average basis weight of the SMC over the entire width in the width direction thereof. Further, the Wf of the rectangular region was 45%, which was 79% of the average Wf of the SMC over the entire width in the width direction thereof.

When 60 pieces of rectangular regions each having a size of 24.79 mm in the width direction of the SMC × 200 mm in the longitudinal direction of the SMC were cut out from the boundary line of the resulting SMC, the basis weight of each of all the rectangular regions was 80% or more and 120% or less of the average basis weight.

Further, when two pieces of rectangular regions each having a size of 24.79 mm in the width direction of the SMC × 200 mm in the longitudinal direction of the SMC were cut out so as to be adjacent with each other from the boundary line of the resulting SMC toward the central portion in the width direction of the SMC, the basis weight of the rectangular region on the endmost portion was higher than that of the region on the inner side thereof.

Industrial Applicability

A molded article produced using the short fiber-reinforced prepreg sheet according to the present invention can be suitably used in an automobiles and other transportation equipment.

Reference Signs List

101: bundle length
102: orientation direction
201: first sheet roll
202: first mold release film
203: first resin bath
204: first resin sheet
211: second sheet roll
212: second mold release film
213: second resin bath
214: second resin sheet
221: first conveyor
222: second conveyor
231: bobbin
232: reinforcing fiber bundle
233: nip roll
234: cutter
241: chopped fiber bundle
242: standing wall
243: distributor
244: chopped fiber-bundle deposit
251: short fiber-reinforced prepreg sheet precursor
252: pressurization mechanism
253: short fiber-reinforced prepreg sheet
261: direction of travel of moving body
301: end of short fiber-reinforced prepreg sheet
302: width of short fiber-reinforced prepreg sheet

303: direction of travel of first conveyor
401: end of chopped fiber-bundle deposit
402: width of chopped fiber-bundle deposit
403: direction of travel of first conveyor
501: boundary line
502: direction of travel of first conveyor
601: baffle plate or roll
602: angle
603: direction of travel of moving body
701: standing wall
702: gradual increase section
703: direction of travel of moving body
801: obstacle
802: chopped fiber bundle
803: standing wall

## Claims

1. A short fiber-reinforced prepreg sheet comprising a matrix resin and chopped fiber bundles,

wherein the coefficient of variation, CVa, of the basis weight of said short fiber-reinforced prepreg sheet over the entire width in the width direction thereof is 15% or less;

wherein, when a rectangular region having a size of Lb (mm) in the width direction and 200 mm in the longitudinal direction is provided along a boundary line which is set (the average bundle length of said chopped fiber bundles/2) mm inward from each end in the width direction of said short fiber-reinforced prepreg sheet, on the inner side of said short fiber-reinforced prepreg sheet with respect to said boundary line such that the long side of said rectangular region overlaps with said boundary line, the basis weight of said rectangular region is 80% or more and 105% or less of the average basis weight of said short fiber-reinforced prepreg sheet over the entire width in the width direction thereof; and

wherein:

Na represents the number (integer) of partitions which makes the length of one unit closest to 100 mm when said short fiber-reinforced prepreg sheet is equally divided in the sheet width direction;

La represents the value obtained by dividing the sheet width by Na;

Nb represents the number (integer) of partitions which makes the length of one unit closest to 25 mm when the portion of said short fiber-reinforced prepreg sheet between said boundary lines at both end portions is equally divided in the sheet width direction;

Lb represents the value obtained by dividing the length between said boundary lines at both end portions by Nb; and

said coefficient of variation, CVa, of the basis weight of said short fiber-reinforced prepreg sheet over the entire width in the width direction thereof, represents the coefficient of variation obtained by cutting out Na pieces of squares each having sides of La (mm) from said prepreg sheet so as to be adjacent with each other in the sheet width direction, and calculating from the mass Wi (i = 1 to Na) of each of the regions of the thus cut out squares, using the following equations (1) and (2):

[Math 1]

$$\mathrm{CVa}\,[\%] = \frac{1}{W_{ave}} \times \sqrt{\frac{\sum_{1}^{Na}\,\left(W_i{}^2 - W_{ave}{}^2\right)}{Na}} \times 100 \qquad (1)$$

[Math 2]

$$\mathrm{Wave} = \sum_{1}^{Na}\frac{W_i}{Na} \qquad (2)$$

2. The short fiber-reinforced prepreg sheet of claim 1, wherein an area of at least 10 mm extending outward from each end in the width direction of said short fiber-reinforced prepreg sheet is covered with a mold release film.

3. The short fiber-reinforced prepreg sheet of claim 1 or 2, wherein the Wf (%) of said rectangular region arranged on the inner side of said short fiber-reinforced prepreg sheet with respect to said boundary line is 80% or more and 120% or less of the average Wf (%) of said short fiber-reinforced prepreg sheet over the entire width in the width direction thereof; wherein Wf represents the mass proportion of the reinforcing fibers contained in said short fiber-reinforced prepreg sheet.

4. The short fiber-reinforced prepreg sheet of any one of claims 1 to 3, wherein, when Nb pieces of rectangular regions each having a size of Lb (mm) $\times$ 200 mm are cut out so as to be adjacent with each other in the width direction, from the portion of said prepreg sheet between said boundary lines at both end portions, such that the long sides of said rectangular regions are parallel to said boundary lines, the basis weight of each of all said rectangular regions is 80% or more and 120% or less of the average basis weight of said short fiber-reinforced prepreg sheet over the entire width in the width direction thereof.

5. The short fiber-reinforced prepreg sheet of any one of claims 1 to 4, wherein, when two pieces of rectangular regions each having a width of Lb (mm) and a length of 200 mm are cut out, in order, from the end in the width direction of said short fiber-reinforced prepreg sheet in the inward direction of said short fiber-reinforced prepreg sheet, the rectangular region on the end portion side of said short fiber-reinforced prepreg sheet has a lower basis weight.

6. The short fiber-reinforced prepreg sheet of any one of claims 1 to 5, wherein said reinforcing fibers are carbon fibers.

7. The short fiber-reinforced prepreg sheet of any one of claims 1 to 6, wherein said chopped fiber bundles have an average bundle length of 5 mm or more and 100 mm or less.

8. The short fiber-reinforced prepreg sheet of any one of claims 1 to 7, wherein the average basis weight of said short fiber-reinforced prepreg sheet over the entire width in the width direction thereof is from 1,000 g/m$^2$ to 4,000 g/m$^2$.

9. A method of producing a short fiber-reinforced prepreg sheet, said method comprising:

   a scattering step of scattering chopped fiber bundles on a moving body that moves continuously in the downstream direction of the production process, to obtain a chopped fiber-bundle deposit; and
   an impregnation step of impregnating said chopped fiber-bundle deposit with a matrix resin, by layering a film coated with said matrix resin, on at least one side of said chopped fiber-bundle deposit;

   wherein said chopped fiber-bundle deposit is passed through a mechanism for adjusting the basis weight of end portions, that adjusts the basis weight of the end portions in the width direction of said chopped fiber bundles that have been scattered, before being passed through said impregnation step.

10. The method of producing a short fiber-reinforced prepreg sheet short fiber-reinforced prepreg sheet, of claim 9, wherein said mechanism for adjusting the basis weight of end portions is a mechanism that, after the completion of said scattering step performed within a scattering region having standing walls that restrict both end portions in the width direction of said moving body, spreads and levels said chopped fiber bundles included in high basis weight regions formed at both end portions in the width direction of said chopped fiber-bundle deposit, outward in the width direction.

11. The method of producing a short fiber-reinforced prepreg sheet short fiber-reinforced prepreg sheet, of claim 9 or 10, wherein said mechanism for adjusting the basis weight of end portions is a mechanism that, after the completion of said scattering step performed within a scattering region having standing walls that restrict both end portions in the width direction of said moving body, spreads and levels said chopped fiber bundles included in high basis weight regions formed at said both end portions, outward in the width direction, by baffle plates or rolls disposed on the downstream side of said scattering region such that said baffle plates or rolls extend outwardly toward the downstream direction.

12. The method of producing a short fiber-reinforced prepreg sheet short fiber-reinforced prepreg sheet, of claim 9, wherein said mechanism for adjusting the basis weight of end portions is standing walls that have a section in which the distance between said standing walls gradually increases toward the downstream of said production process, in said scattering step performed within a scattering region having standing walls that restrict both end portions in the width direction of said moving body.

13. The method of producing a short fiber-reinforced prepreg sheet short fiber-reinforced prepreg sheet, of claim 9, wherein said mechanism for adjusting the basis weight of end portions is obstacles that are provided on the inner sides of said standing walls and that prevent said chopped fiber bundles from colliding with said standing walls, in said scattering step performed within a scattering region having standing walls that restrict both end portions in the width direction of said moving body.

EP 4 316 765 A1

【FIG. 1】

101

102

【FIG. 2】

EP 4 316 765 A1

【FIG. 3】

301

301

303

302

【FIG. 4】

401

401

403

402

【FIG. 5】

【FIG. 6】

【FIG. 7】

EP 4 316 765 A1

【FIG. 8】

<h1 style="text-align:center">INTERNATIONAL SEARCH REPORT</h1>

| International application No. |
|---|
| **PCT/JP2022/013893** |

**A. CLASSIFICATION OF SUBJECT MATTER**

*B29B 11/16*(2006.01)i; *D04H 13/00*(2006.01)i; *C08J 5/04*(2006.01)i; *D04H 1/732*(2012.01)i; *B29C 70/18*(2006.01)i; *B29C 70/28*(2006.01)i

FI: C08J5/04 CFD; D04H13/00; D04H1/732; B29B11/16; B29C70/28; B29C70/18

According to International Patent Classification (IPC) or to both national classification and IPC

**B. FIELDS SEARCHED**

Minimum documentation searched (classification system followed by classification symbols)

B29B11/16; D04H13/00; C08J5/04; D04H1/732; B29C70/18; B29C70/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-039124 A (TORAY IND., INC.) 14 March 2019 (2019-03-14) | 1-8 |
| Y | claims, paragraphs [0017], [0019]-[0024], examples | 9-13 |
| X | JP 2010-235779 A (TORAY IND., INC.) 21 October 2010 (2010-10-21) | 1-7 |
| Y | claims, paragraphs [0010], [0053], [0102]-[0223], examples | 9-13 |
| Y | CN 207736777 U (CHANGZHOU RIXIN MOLDING TECHNOLOGY CO., LTD.) 17 August 2018 (2018-08-17) claims, paragraphs [0004], [0011], fig. 1 | 9-13 |
| A | WO 2020/090877 A1 (TORAY IND., INC.) 07 May 2020 (2020-05-07) claims, examples, entire text | 1-13 |
| A | JP 2013-202969 A (MITSUBISHI RAYON CO., LTD.) 07 October 2013 (2013-10-07) claims, examples, entire text | 1-13 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **20 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
| --- |
| **PCT/JP2022/013893** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2013-028062 A (MITSUBISHI RAYON CO., LTD.) 07 February 2013 (2013-02-07) claims, examples, entire text | 1-13 |

Form PCT/ISA/210 (second sheet) (January 2015)

**INTERNATIONAL SEARCH REPORT**
Information on patent family members

International application No.

**PCT/JP2022/013893**

| Patent document cited in search report | | | Publication date (day/month/year) | Patent family member(s) | | | Publication date (day/month/year) |
|---|---|---|---|---|---|---|---|
| JP | 2019-039124 | A | 14 March 2019 | (Family: none) | | | |
| JP | 2010-235779 | A | 21 October 2010 | US | 2011/0143110 | A1 | |
| | | | | claims, examples | | | |
| | | | | US | 2012/0012263 | A1 | |
| | | | | WO | 2010/013645 | A1 | |
| | | | | EP | 2314642 | A1 | |
| | | | | EP | 2803694 | A2 | |
| | | | | CA | 2731283 | A | |
| | | | | CN | 102056971 | A | |
| | | | | KR | 10-2011-0055482 | A | |
| | | | | TW | 201008988 | A | |
| | | | | KR | 10-2012-0034240 | A | |
| | | | | TW | 201239017 | A | |
| | | | | CN | 103524769 | A | |
| CN | 207736777 | U | 17 August 2018 | (Family: none) | | | |
| WO | 2020/090877 | A1 | 07 May 2020 | US | 2021/0323196 | A1 | |
| | | | | claims, examples | | | |
| | | | | CN | 112955294 | A | |
| | | | | KR | 10-2021-0083259 | A | |
| JP | 2013-202969 | A | 07 October 2013 | (Family: none) | | | |
| JP | 2013-028062 | A | 07 February 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014210991 A
- JP 2019039124 A

- JP 5822033 B